(19) Europäisches Patentamt
European Patent Office
Office européen des brevets

(11) **EP 2 913 479 B1**

(12) **EUROPÄISCHE PATENTSCHRIFT**

(45) Veröffentlichungstag und Bekanntmachung des Hinweises auf die Patenterteilung:
**28.08.2019 Patentblatt 2019/35**

(51) Int Cl.:
*F01D 5/06* (2006.01)  *F01D 9/04* (2006.01)
*F04D 19/00* (2006.01)  *F04D 29/54* (2006.01)
*F01D 5/14* (2006.01)  *F04D 29/32* (2006.01)

(21) Anmeldenummer: **15156108.1**

(22) Anmeldetag: **23.02.2015**

(54) **Tandemschaufel einer Strömungsmaschine**

Tandem blades of a turbo-machine

Aubes en tandem d'une turbomachine

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.02.2014 DE 102014203604**

(43) Veröffentlichungstag der Anmeldung:
**02.09.2015 Patentblatt 2015/36**

(73) Patentinhaber: **Rolls-Royce Deutschland Ltd & Co KG**
**15827 Blankenfelde-Mahlow (DE)**

(72) Erfinder: **Gümmer, Volker, Prof. Dr.**
**85411 Hohenkammer (DE)**

(74) Vertreter: **Maikowski & Ninnemann**
**Patentanwälte Partnerschaft mbB**
**Postfach 15 09 20**
**10671 Berlin (DE)**

(56) Entgegenhaltungen:
**EP-A1- 2 626 512     EP-A1- 2 626 513**
**EP-A1- 2 626 514**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Schaufelreihengruppe gemäß dem Oberbegriff des Anspruchs 1.

Die aerodynamische Belastbarkeit und die Effizienz von Strömungsmaschinen, insbesondere Bläsern, Verdichtern, Turbinen, Pumpen und Ventilatoren, wird durch das Wachstum und die Ablösung von Grenzschichten in der Nähe und auf den Naben- und Gehäusewänden begrenzt. Der Stand der Technik hält für den Fall hoher aerodynamischer Belastung und starken Grenzschichtwachstums auf den Ringkanalseitenwänden (Nabe oder Gehäuse) nur bedingt Lösungen bereit.

Stand der Technik in Strömungsmaschinen sind Anordnungen mit doppelreihigen Leiträdern, üblicherweise eingesetzt als Austrittsleitrad in Verdichtern, oder auch doppelreihige Rotoranordnungen, bei denen die Rotoren direkt benachbart gegenläufig operieren oder bei denen zwei direkt benachbarte Rotorschaufelreihen auf einer gemeinsamen Trommel befestigt sind. Eine derartige Strömungsmaschine ist beispielsweise aus der EP 2 261 463 A2 bekannt. Bei diesen Anordnungen, und insbesondere bei denen, die mehrere direkt benachbarte und relativ zueinander fest angeordnete Schaufelreihen aufweisen (also beispielsweise mehrere Rotorschaufelreihen auf derselben Trommel oder mehrere Statorschaufelreihen), ergeben sich bei höherer aerodynamischer Belastung starke Grenzschichtablösung in der Randzone des Hauptströmungspfades, d. h. an der Naben- oder Gehäusekontur.

Die Probleme in den Randbereichen sind primär darauf zurückzuführen, dass die in der Mitte des Hauptströmungspfades günstige Anordnung zweier benachbarter Schaufelkanten einer Schaufelreihengruppe zueinander sich in der Nähe der Strömungspfadberandung ungünstig auswirkt. Auch sind von Einzelschaufelreihen bekannte Entwurfsregeln ungültig. Für Schaufelreihengruppen sind neue Regeln zu erschließen. Insbesondere kann die erforderliche Strömungsumlenkung entweder in Teilen der Schaufelhöhe oder entlang der gesamten Schaufelhöhe schnell so hoch sein, dass die konventionelle Anordnung einer Schaufelreihengruppe zu einer abgelösten Grenzschichtströmung in den Randbereichen des Hauptströmungspfades an Naben- und/oder Gehäusewänden führt.

Aus der US 2013/0209223 A1 ist es bekannt, die meridionale Überlappung zwischen vorderen und hinteren Schaufeln einer Schaufelreihengruppe zwischen der Mitte des Hauptströmungspfades und der Hauptströmungspfadberandung zu variieren. Aus der US 2013/0209224 A1 ist es bekannt, den Grad der Überlappung zwischen vorderen und hinteren Schaufeln einer Schaufelreihengruppe sowie den Abstand benachbarter Kanten der vorderen und hinteren Schaufel zwischen der Mitte des Hauptströmungspfades und der Hauptströmungspfadberandung zu variieren.

EP 2 626 514 A offenbart ein anderes Beispiel von Schaufelreihengruppen.

Eine Variation der Überlappung und des Abstandes ergibt sich üblicherweise bei jeder Realisierung einer Schaufelreihengruppe ohne dass dabei zwangsläufig eine vorteilhafte Beeinflussung der Strömung erreicht würde. Die US 2013/0209223 A1 und US 2013/0209224 A1 beschreiben unterschiedlichste Möglichkeiten der Variation, ohne dass dabei aerodynamisch bedeutsame Parameter herangezogen werden. Auch fehlt eine technische Lehre im Hinblick auf die Festlegung der Profiltiefen und die genaue Gestalt aller Schaufelkanten zweier benachbarter Mitgliedschaufelreihen, obwohl gerade diese von entscheidender Bedeutung für eine günstige Beeinflussung des Gesamtströmungsverhaltens sind. Die US 2013/0209223 A1 behandelt den Kantenabstand benachbarter Mitgliedschaufelreihen in der Meridionalebene (Maschinenseitenansicht). Die Strömungsrichtung in Schaufelreihen verläuft aber mit einer teils erheblichen Strömungsdrallkomponente, sodass die Beschaufelung erheblich gegen die Meridionalrichtung angestellt sein kann. Entscheidend für das aerodynamische Verhalten ist eine Festschreibung der Schaufelkanten in einer Ansicht senkrecht und parallel zur Schaufelprofilsehne. Eine in der Meridionalebene sichtbare Schaufelkante kann also durch unendlich viele unterschiedliche in den aerodynamisch relevanten Sehnen- und Sehnenorthogonalrichtungen festgelegte Schaufelkantenformen zustande kommen. Sie kann somit die Gestalt der Schaufelkanten nicht eindeutig beschreiben und demzufolge auch nicht die aerodynamische Problemstellung einer vorteilhaften Strömungsbeeinflussung lösen.

Der vorliegenden Erfindung liegt die Aufgabe zu Grunde, eine Schaufelreihengruppe bereitzustellen, die durch die Festlegung unterschiedlicher Profiltiefen zweier benachbarter Mitgliedschaufelreihen sowohl im mittleren Bereich als auch in den Randbereichen des Hauptströmungspfades ein günstiges Strömungsverhalten realisiert.

Diese Aufgabe wird erfindungsgemäß durch eine Schaufelreihengruppe mit den Merkmalen des Anspruchs 1 gelöst.

Danach stellt die erfindungsgemäße Lösung eine Schaufelreihengruppe bestehend aus mindestens zwei benachbarten und relativ zueinander fest angeordneten Schaufelreihen (mehrere miteinander rotierende Rotorschaufelreihen oder mehrere Statorschaufelreihen) bereit, die in einem Hauptströmungspfad einer Strömungsmaschine anordbar sind. Dabei ist die Vorderkante mindestens einer Schaufel der hinteren Mitgliedsschaufelreihe in der Umgebung einer Schaufel der vorderen Mitgliedsschaufelreihe vorgesehen, wobei gegebenenfalls zwischen der Druckseite der Schaufel und der Saugseite der Schaufel eine Nebenpassage ausgebildet sein kann.

Aufgrund der hohen Relevanz der Profiltiefen der beteiligten Schaufeln für eine günstige Strömungsführung und eine schaufelhöhenabhängige Ausnutzung der Potentialeffekte im aerodynamisch wichtigen Interferenzbereich der beiden Mitgliedschaufelreihen wird in wenigstens einem Teil des Bereiches zwischen der mittleren Meridionalstromlinie SLM (in Hauptströmungspfadmitte) und mindestens einer der Hauptströmungspfadberandungen (Nabe und Gehäuse) die Profiltiefe für eine der Mitgliedschaufelreihen individuell, oder für beide Reihen additiv oder für beide Reihen effektiv in Richtung der Hauptströmungspfadberandung ansteigend vorgesehen. So ist vorgesehen, dass wenigstens eine der folgenden normierten Profiltiefen im Bereich zwischen der mittleren Meridionalstromlinie und mindestens einer der Hauptströmungspfadberandungen in Richtung der Hauptströmungspfadberandung wenigstens lokal ansteigt: die normierte Profiltiefe In(i) der vorderen Schaufel, die normierte Profiltiefe In(i+1) der hinteren Schaufel, die normierte additive Profiltiefe Iaddn und/oder die normierte effektiven Profiltiefe Ieffn, jeweils einer Schaufelreihenpaarung.

Gemäß einer Ausgestaltung der Erfindung ist an der Hauptströmungspfadberandung eine mindestens 10%ige Profiltiefenerhöhung gegenüber dem Wert an der mittleren Meridionalstromlinie vorgesehen ist. Mit anderen Worten ist für wenigstens eine der obengenannten normierten Profiltiefen, die im Bereich zwischen der mittleren Meridionalstromlinie und der Hauptströmungspfadberandung in Richtung der Hauptströmungspfadberandung wenigstens lokal ansteigt, an der Hauptströmungspfadberandung ein Wert von größergleich 1,1 vorgesehen. Dabei liegt der Wert der jeweiligen Profiltiefe (d.h. der normierten Profiltiefe In(i) der vorderen Schaufel, der normierten Profiltiefe In(i+1) der hinteren Schaufel, der normierten additiven Profiltiefe Iaddn und der normierten effektiven Profiltiefe Ieffn) an der mittleren Meridionalstromlinie bei eins, wie sich aus den jeweiligen Definitionen der normierten Profiltiefe ergibt.

Gemäß einer Ausgestaltung der Erfindung weist wenigstens eine der normierten Profiltiefen In einen Wert an der Hauptströmungspfadberandung im Bereich 1,15 < In < 1,20 auf. In einer weiteren Ausgestaltung weist wenigstens eine der normierten Profiltiefen In einen Wert an der Hauptströmungspfadberandung im Bereich 1,2 < In < 1,3 auf.

Eine weitere Ausgestaltung der Erfindung sieht vor, dass entlang der Schaufelhöhe für wenigstens eine der besagten normierten Profiltiefen ein im wesentlichen oder exakt konstanter Verlauf in einem Teilbereich zwischen der mittleren Meridionalstromlinie SLM und der Hauptströmungspfadberandung vorgesehen ist.

Weitere Ausgestaltungen der Erfindung sind in den Unteransprüchen angegeben.

Die vorliegende Erfindung bezieht sich auf Schaufeln von Strömungsmaschinen wie Bläser, Verdichter, Pumpen, Ventilatoren und Turbinen axialer, halbaxialer und radialer Bauart mit gasförmigem oder flüssigem Arbeitsmedium. Die Strömungsmaschine kann eine oder mehrere Stufen mit jeweils einem Rotor und einem Stator umfassen, in Einzelfällen wird die Stufe lediglich durch einen Rotor gebildet. Der Rotor besteht aus einer Reihe oder aus mehreren benachbarten und eine Gruppe bildenden Reihen von Schaufeln, die mit der rotierenden Welle der Maschine verbunden sind und Energie mit dem Arbeitsmedium austauschen. Erfindungsgemäß günstig ist eine Anwendung auf Strömungsarbeitsmaschinen, bei denen der Rotor Energie an das Arbeitsmedium abgibt.

Der Rotor kann mit Deckband oder mit Laufspalt am äußeren Schaufelende ausgeführt sein. Der Stator besteht aus einer Reihe oder aus mehreren benachbarten und eine Gruppe bildenden Reihen von feststehenden Schaufeln, die nabenseitig wie gehäuseseitig mit festem oder freiem Schaufelende mit Spalt ausgeführt sein können.

Die Rotortrommel und die Beschaufelung sind üblicherweise von einem Gehäuse umgeben, in anderen Fällen, z. B. bei Propellern oder Schiffsschrauben, existiert kein Gehäuse. Die Maschine kann auch einen Stator vor dem ersten Rotor, ein sogenanntes Vorleitrad, aufweisen. Mindestens ein Stator oder Vorleitrad kann -abweichend von der unbeweglichen Fixierung- drehbar gelagert sein, um den Anstellwinkel zu verändern. Eine Verstellung erfolgt beispielsweise durch eine von außerhalb des Ringkanals zugängliche Spindel. Alternativ kann die besagte Strömungsmaschine bei Mehrstufigkeit zwei gegenläufige Wellen besitzen, so daß die Rotorschaufelreihen von Stufe zu Stufe die Drehrichtung wechseln. Hierbei existieren keine Statoren zwischen aufeinanderfolgenden Rotoren. Schließlich kann die Strömungsmaschine alternativ eine Nebenstromkonfiguration derart aufweisen, daß sich der einstromige Ringkanal hinter einer bestimmten Schaufelreihe in zwei konzentrische Ringkanäle aufteilt, die ihrerseits mindestens jeweils eine weitere Schaufelreihe beherbergen.

Die Erfindung wird nachfolgend unter Bezugnahme auf die Figuren der Zeichnung anhand mehrerer Ausführungsbeispiele näher erläutert. Es zeigen:

Fig. 1:    mehrere Schaufelreihengruppen nach dem Stand der Technik,

Fig. 2:    eine Übersicht über mehrere erfindungsgemäße Schaufelreihengruppen,

Fig. 3:    die Definition von Meridionalstromlinien,

Fig. 4:    eine erfindungsgemäße Schaufelreihengruppe mit Umfangsbetrachtung,

Fig. 5:    erfindungsgemäße Definitionen in einem Meridionalstromlinienschnitt,

Fig. 6:    erfindungsgemäße Schaufelreihengruppen in der Ansicht B-B,

Fig. 7:    erfindungsgemäße Festlegungen der normierten Profiltiefen,

Fig. 8:    erfindungsgemäße Festlegungen des relativen Profiltiefenverhältnisses.

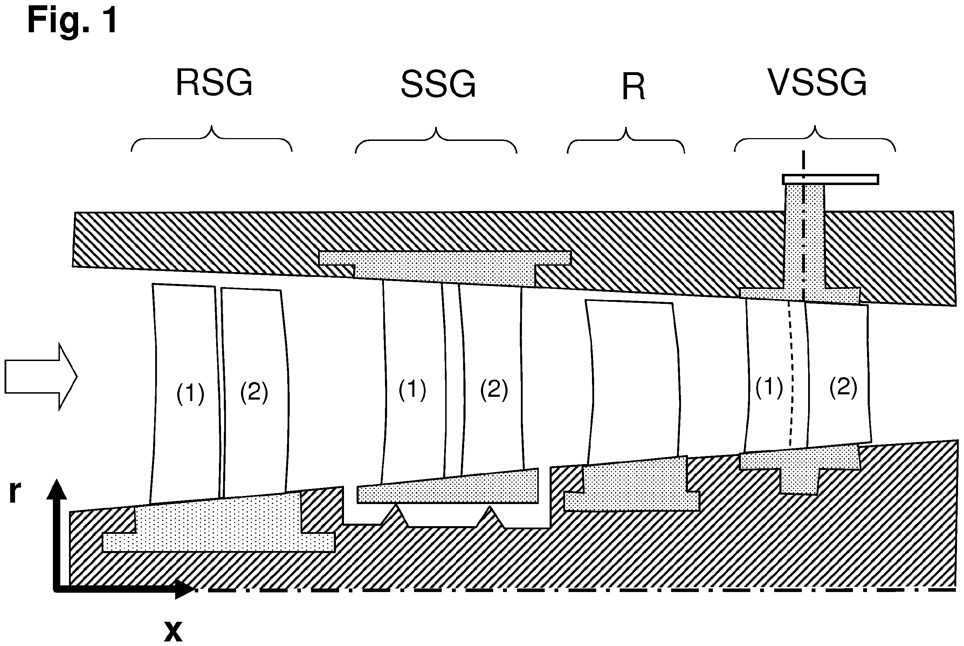

Eine konventionelle Schaufelreihengruppe nach dem Stand der Technik, wie sie in Fig. 1 gezeigt ist, besitzt keine besonderen, eine spezifische Variation der Profiltiefe betreffenden Merkmale. Insbesondere eine aus Profiltiefenvariationen hervorgehende Sonderform der vier Schaufelkanten ist nicht gegeben. Es sind keine weiteren Gestaltungsmerkmale vorhanden, die aus einer komplexeren Ausnutzung der Anordnung als Schaufelgruppe innovativ entwickelt werden können. Eine Schaufelreihengruppe, wie hier betrachtet, besitzt, anders als eine Einzelschaufelreihe, eine im Verhältnis viel höhere Belastung der Seitenwandgrenzschichten, die durch besondere Zusatzmaßnahmen aufzufangen ist. Ein Überschuß an Profiltiefe im Bereich der Schaufelenden unter der aerodynamischen Sonderwirkung einer Anordnung als Schaufelreihengruppe ist deshalb ein Weg zu Erweiterung des Betriebsbereiches von Schaufelreihengruppen.

Die Fig. 1 zeigt in der durch die Axialrichtung x und die Radialrichtung r gebildeten Meridianebene mehrere Schaufelreihengruppen, wobei jede der Schaufelreihengruppen aus jeweils zwei gleichartigen und ihre relative Anordnung zueinander (sowohl in Umfangsrichtung als auch in Meridionalrichtung) nicht ändernden Mitgliedsschaufelreihen besteht. Es handelt sich also um doppelreihige Leiträder oder Laufräder.

So besteht eine Rotorschaufelreihengruppe RSG aus zwei mit gleicher Drehgeschwindigkeit laufenden und miteinander verbundenen Rotorschaufelreihen; das erste Mitglied der Gruppe ist mit (1) und das zweite Mitglied der Gruppe mit (2) gekennzeichnet. Eine Statorschaufelreihengruppe SSG besteht aus zwei direkt benachbarten feststehenden Statorschaufelreihen (1) und (2).

Eine variable Statorschaufelreihengruppe VSSG besteht aus zwei direkt benachbarten Statorschaufelreihen (1) und (2), wobei jeweils eine Schaufel der vorderen Reihe mit einer Schaufel der hinteren Reihe auf einem gemeinsamen Drehteller vorgesehen sind und auf diese Weise gemeinsam um die Drehachse verstellbar sind.

Allen Schaufelreihengruppen nach dem Stand der Technik ist gemeinsam, dass entweder die zwei Mitglieder der Schaufelreihengruppe mit großem Abstand voneinander angeordnet sind, oder aber die einzelnen Mitglieder eng zusammenstehen und kaum Änderungen der Ausdehnung der beteiligten Schaufeln in Profilsehnenrichtung und/oder Meridionalrichtung entlang der Schaufelhöhe vorgesehen sind. Eine Variation der meridionalen Überlappung in Schaufelhöhenrichtung gehört zum Stand der Technik, doch wird diese losgelöst von der Ausdehnung der einzelnen Mitgliedschaufelreihen betrachtet und entbehrt Festlegungen in der eigentlich aerodynamisch relevanten Bezugssystem parallel bzw. senkrecht zur Profilsehne eines Schaufelschnitts. So kann also ein in der Meridionalebene (x-r) kurz erscheinender Schaufelschnitt tatsächlich eine besonders lange Profiltiefe besitzen. Zudem fehlt im Stand der Technik eine technische Lehre zur Festlegung in den für die strömungstechnische Problemstellung relevanten Betrachtungsebenen.

Die Lösungen nach dem Stand der Technik sind entweder augrund des Fehlens relevanter Kriterien nicht verwertbar oder sind für die Strömung in der Nähe der Hauptströmungspfadberandung (Nabe oder Gehäuse) sehr nachteilig. Insbesondere sind übliche Schaufelreihen gemäß der Fig. 1 aufgrund extrem hoher Druckverluste und der Nichterreichung der angestrebten Strömungsumlenkung (beides verursacht durch starke Sekundärströmungen, Grenzschichtablösung und Rückströmung) nachteilig. Die Konsequenz ist ein insgesamt ungünstiges Leistungsverhalten der Strömungsmaschine im Hinblick auf den Wirkungsgrad und die Stabilität der Strömung.

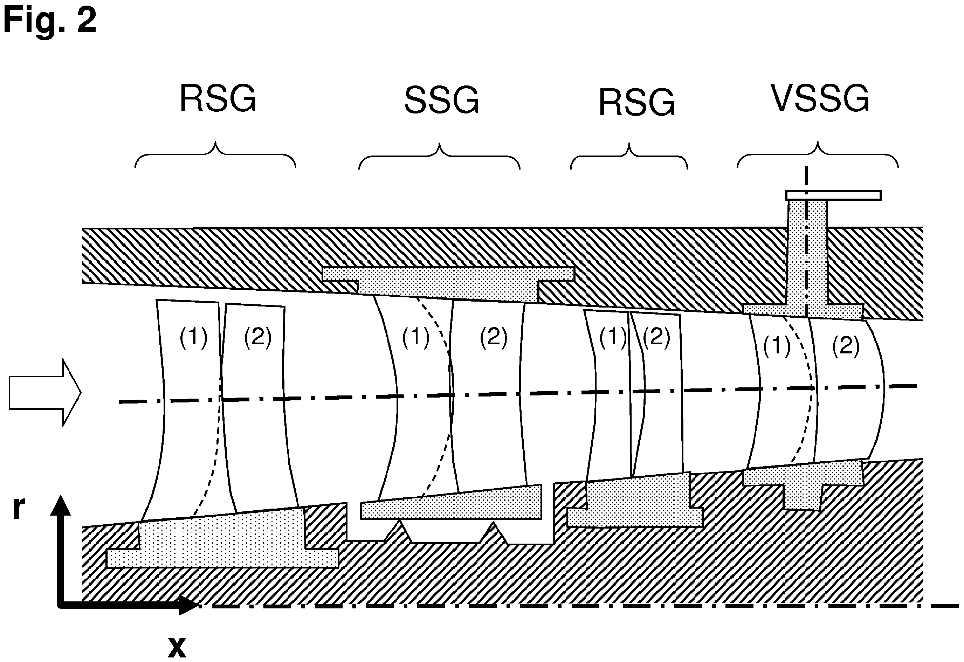

Die Fig. 2 zeigt der vereinfachten Darstellung zuliebe verschiedene erfindungsgemäße Schaufelgruppen, wie sie in der durch die Axialrichtung x und die Radialrichtung r gebildeten Meridionalebene erscheinen können, wobei die genaue erfindungsgemäße Festlegung in einem profilsehnenrichtungsbezogenen System zu erfolgen hat. Diese Methode wird im weiteren Verlauf dieses Dokumentes im Detail beschrieben. Jede der Schaufelreihengruppen besteht auch hier aus jeweils zwei gleichartigen und die Relativposition zueinander nicht ändernden Mitgliedsschaufelreihen.

So besteht eine erfindungsgemäße Rotorschaufelreihengruppe RSG aus mindestens zwei mit gleicher Drehgeschwindigkeit laufenden und miteinander verbundenen Rotorschaufelreihen. Eine erfindungsgemäße Statorschaufelreihengruppe SSG besteht aus mindestens zwei direkt benachbarten feststehenden Statorschaufelreihen.

Eine erfindungsgemäße variable Statorschaufelreihengruppe VSSG besteht aus mindestens zwei direkt benachbarten Statorschaufelreihen. Eine Schaufel einer der Mitgliedsschaufelreihen ist hier mit mindestens einer Schaufel der ihr unmittelbar stromab liegenden Mitgliedsschaufelreihe auf einem gemeinsamen Drehteller vorgesehen. Alternativ können aber auch, wie hier nicht bildlich dargestellt, mindestens zwei, unterschiedlichen Mitgliedschaufelreihen zugehörige Schaufeln je auf einem individuellen Drehteller angeordnet sein.

Jede der erfindungsgemäßen Schaufelreihengruppe RSG, SSG und VSSG können auch mehr als zwei Mitgliedsschaufelreihen besitzen.

Die beschriebene Konfiguration der Schaufelreihengruppe schließt die Möglichkeit ein, dass an mindestens einer Mitgliedsschaufelreihe der Abstand zwischen zwei benachbarten Schaufeln entlang des Umfangs variiert. Es kann auch günstig sein, wenn die axiale Position zweier benachbarter Schaufeln dieser Schaufelreihe entlang des Umfangs variiert. Es kann auch günstig sein, wenn die Profiltiefe zweier benachbarter Schaufeln dieser Schaufelreihe entlang des Umfangs variiert.

Es kann vorteilhaft sein, wenn die Anzahl der Schaufeln zweier benachbarter Mitgliedsschaufelreihen in einem besonderen Verhältnis stehen, das heißt, dass die Anzahl der Schaufeln der Mitgliedsschaufelreihe (i) ein Vielfaches der Anzahl der Schaufeln der Mitgliedsschaufelreihe (i+1) bildet, oder die Anzahl der Schaufeln der Mitgliedsschaufelreihe (i+1) ein Vielfaches der Anzahl der Schaufeln der Mitgliedsschaufelreihe (i) bildet, oder die Anzahl der Schaufeln der Mitgliedsschaufelreihe (i) und die Anzahl der Schaufeln der Mitgliedsschaufelreihe (i+1) gleich sind. Besonders vorteilhaft kann es sein, wenn das Verhältnis der Schaufelzahlen der Reihen (i) und (i+1) im Verhältnis von 1:2 steht.

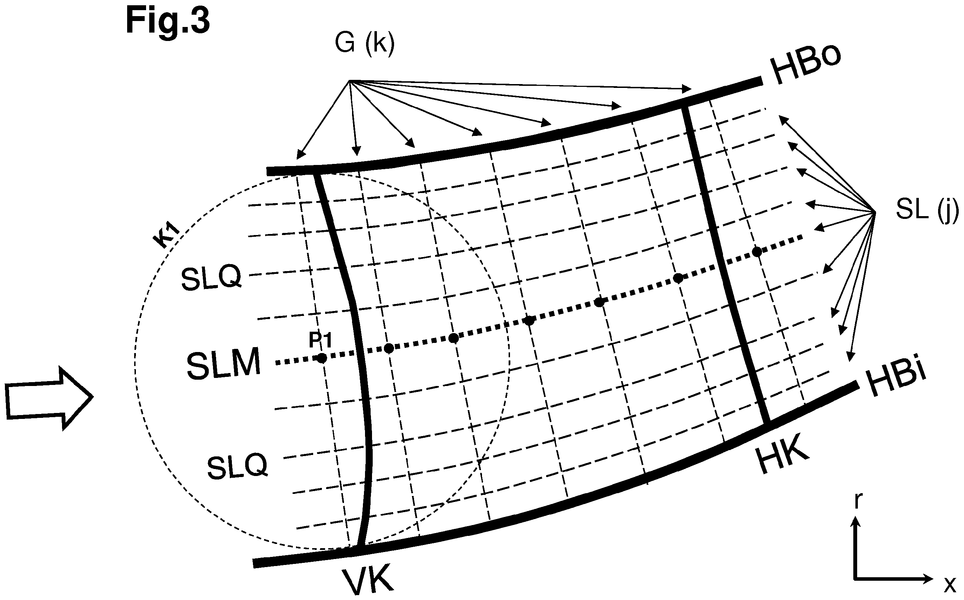

Zum Zweck der Vorbereitung von erfindungsgemäß wichtigen Definitionen zeigt die Fig. 3 zur Definition von Meridionalstromlinien einen Hauptströmungspfad einer Strömungsmaschine mit Durchströmung von links nach rechts (angezeigt durch den dicken Pfeil), in der durch die Axialkoordinate x und die Radialkoordinate r gebildeten Meridionalebene, wobei der Hauptströmungspfad durch die radial inneren Hauptströmungspfadberandung HBi und die radial äußere Hauptströmungspfadberandung HBo begrenzt wird. Mittig zwischen der radial inneren Hauptströmungspfadberandung HBi und der radial äußeren Hauptströmungspfadberandung HBo ist die mittlere Meridionalstromlinie SLM gegeben. Ihr Verlauf entspricht der Verbindung der Mittelpunkte dem Hauptströmungspfad einbeschriebener Kreise, wie im Bild für den ersten markierten Punkt P1 auf der mittleren Meridionalstromlinie SLM und den zugehörigen Kreis K1 beispielhaft verdeutlicht wird. VK und HK bezeichnen die Vorderkante und die Hinterkante einer im Hauptströmungspfad angeordneten Schaufel.

Eine Schar von Geraden G(k) ist innerhalb des Hauptströmungspfades gegeben, deren Mitglieder jeweils senkrecht auf der mittleren Meridionalstromlinie SLM stehen und an den Hauptströmungspfadberandungen HB enden. Weitere Meridionalstromlinien SL(j) sind durch die Verbindung von Punkten bei jeweils gleicher prozentualer Unterteilung der Geraden G(k) zwischen den Hauptströmungspfadberandungen HB definiert.

Die Rotation einer Meridionalstromlinie um die Maschinenachse ergibt eine Meridionalstromfläche SF(j). Der Schnitt einer Meridionalstromfläche mit einer Schaufel der Strömungsmaschine ergibt einen Meridionalstromlinienschnitt SLS(j). Mittig zwischen einer der Hauptströmungspfadberandungen HBi und HBo und der mittleren Meridionalstromlinie SLM ergibt sich auf diese Weise jeweils die Viertelmeridionalstromlinie SLQ.

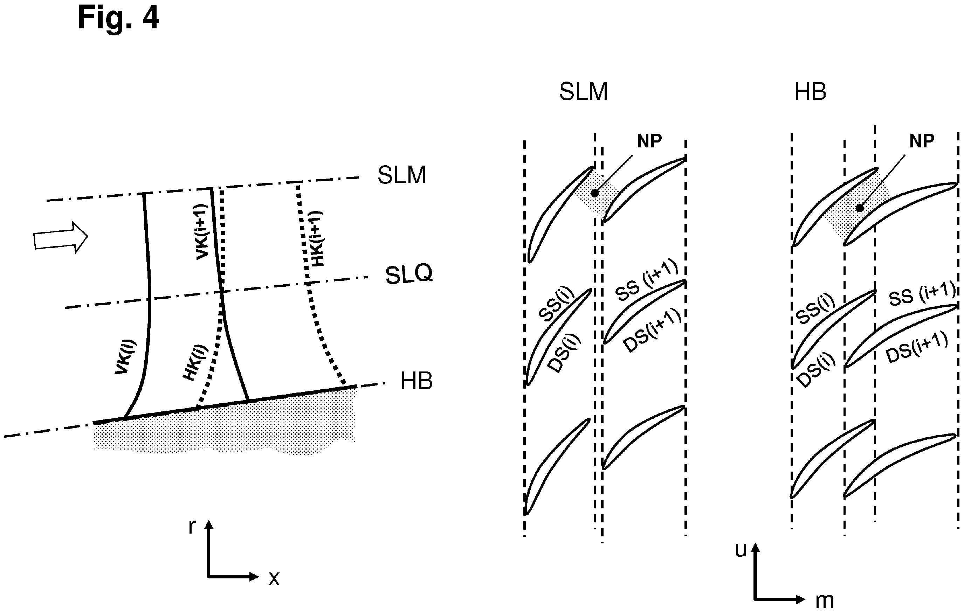

Es kann sich, je nach Schaufelform ergeben, dass die Profiltiefen und Schaufelkantenformen in der Meridionalebene (x,r) nicht oder nicht quantitativ erfassbar sind. Deshalb ist für erfindungsmäße Festlegungen die Betrachtung in einem profilsehnenrichtungsbezogenen Koordinatensystem vorzunehmen. Dazu zeigt die Fig. 4 zunächst auf ihrer linken Seite eine Anordnung von zwei zu einer erfindungsgemäßen Schaufelreihengruppe gehörenden und benachbarten Mitgliedsschaufelreihen (i) und (i+1) in der durch die Axialrichtung x und die Radialrichtung r gebildeten Meridionalebene. Dargestellt ist die erfindungsgemäße Anordnung im Bereich zwischen der Hauptströmungspfadmitte (mittlere Meridionalstromlinie SLM, entlang der dortigen Meridionalrichtung m), und einer Hauptströmungspfadberandung HB. Die Hauptströmungspfadberandung HB stellt eine Kontur an der Nabe oder am Gehäuse der Strömungsmaschine dar, zum Beispiel an einem Drehteller, einer Wandung, einem Statorfuß, einem Statordeckband, einem Rotorfuß oder einem Rotordeckband.

Die Hauptströmungspfadberandung HB ist entweder fest mit dem Ende mindestens einer Mitgliedsschaufelreihe verbunden (wie in der Fig. 4 dargestellt), oder es ist ein Spalt zwischen der Hauptströmungspfadberandung und mindestens dem Ende einer Mitgliedsschaufelreihe vorgesehen.

Die Anordnung zeigt die zwei Mitgliedsschaufelreihen (i) und (i+1) mit jeweils zwei Schaufelkanten, Vorderkante VK(i) und Hinterkante HK(i) beziehungweise Vorderkante VK(i+1) und Hinterkante HK(i+1).

Die rechte Seite der Fig. 4 zeigt die Anordnung der betrachteten zwei Mitgliedsschaufelreihen in einer von der Meridionalkoordinate m und der Umfangsrichtung u gebildeten Meridionalstromfläche. Eine entsprechende Umfangs-abwicklung ist am mittleren Meridionallinienschaufelschnitt SLM in Hauptströmungspfadmitte und an der Hauptströmungspfadberandung HB dargestellt. Der Einfachheit halber (aber erfindungsgemäß nicht zwingend nötig) besitzen hier die beiden Mitgliedschaufelreihen gleiche Schaufelanzahlen. Vorteilhaft ist ebenfalls ein Schaufelanzahlverhältnis der Reihen (i) und (i+1) von 1:2, wobei jede zweite Schaufel der Reihe (i+1) nahe der Druckseite einer Schaufel der Reihe (i) angeordnet ist. Die Saugseiten der Schaufeln (i) und (i+1) sind jeweils mit SS(i) und SS(i+1) und die Druckseiten mit DS(i) und DS(i+1) gekennzeichnet.

Die Schaufeln können günstigerweise so vorgesehen sein, dass zwischen der Druckseite einer Schaufel (i) und der Saugseite einer Schaufel (i+1) eine Nebenpassage (dargestellt als schattierte Fläche und gekennzeichnet mit NP) ausgebildet ist.

Es kann vorgesehen sein, dass in wenigstens einem Bereich der Hauptströmungspfadhöhe von der Vorderkante VK(i+1) der hinteren Mitgliedsschaufelreihe zur Hinterkante HK(i) der vorderen Mitgliedsschaufelreihe ein meridionaler Eingriff vorgesehen ist, dessen Betrag in Richtung mindestens einer der Hauptströmungspfadberandungen HB in wenigstens einem Teilabschnitt zunimmt. Ein solcher meridionaler Eingriff kann bei sämtlichen Ausführungsbeispielen der Erfindung vorgesehen sein.

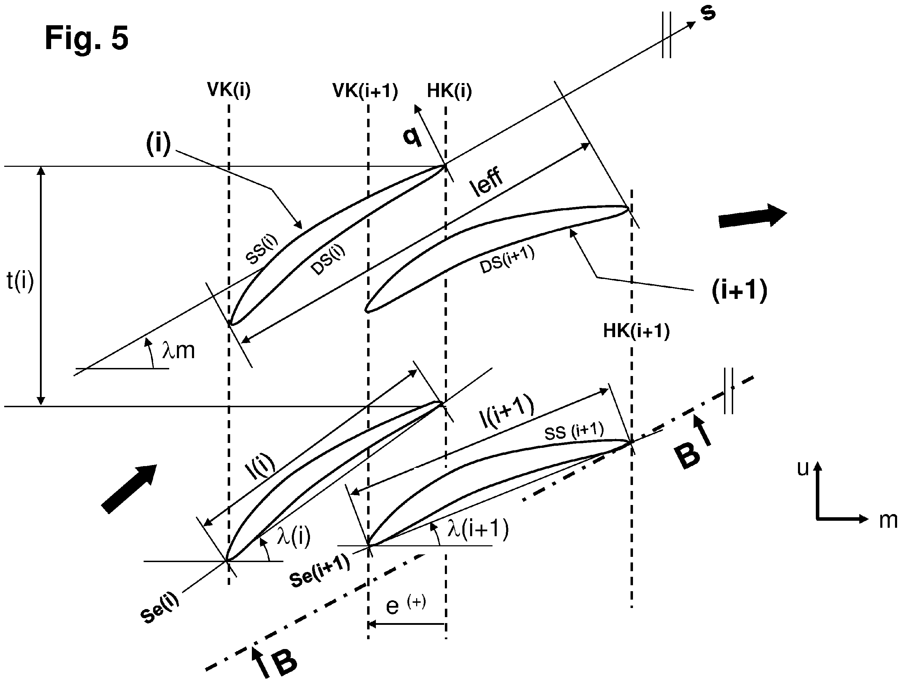

Die Fig. 5 zeigt, wie die rechte Seite der Fig. 4, einen Meridionalstromlinienschaufelschnitt. Es sind die Definition verschiedener relevanter Größen und Ansichten in der durch die Meridionalrichtung m und die Umfangskoordinate u gegebenen Ebene gegeben. Zur Vereinfachung sind nur jeweils 2 Schaufeln und die jeweils dazwischen liegende Schaufelhauptpassage der Mitgliedsschaufelreihen (i) und (i+1) dargestellt. Die Hauptströmungsrichtung ist durch dicke schwarze Pfeile gekennzeichnet. Die Verbindungslinien der Schaufelkanten sind entsprechend mit VK(i), HK(i), VK(i+1) und HK(i+1) gekennzeichnet. Jedes Schaufelprofil ist mit seiner Saugseite SS, seiner Druckseite DS dargestellt. Es wird darauf hingewiesen, dass zu Zwecken einer übersichtlichen Darstellung in der Fig. 5 und auch den anderen Figuren zwischen der Bezeichnung der Mitgliedsschaufelreihen (i) und (i+1) und der Bezeichnung der einzelnen Schaufeln der Mitgliedsschaufelreihen nicht unterschieden wird, d.h. die Schaufeln sind ebenfalls mit (i) und (i+1) bezeichnet.

Die Sehne der vorderen Schaufel Se(i) ist definiert als die druckseitig an das Profil der Schaufel (i) angelegte Tangente. Die Sehne der hinteren Schaufel Se(i+1) ist definiert als die druckseitig an das Profil der Schaufel (i+1) angelegte Tangente.

Die Profiltiefe I(i) der vorderen Schaufel und die Profiltiefe I(i+1) der hinteren Schaufel sind in Richtung der jeweiligen Sehne gegeben. Die Werte der Profiltiefen I(i) und I(i+1) an der mittleren Meridionalstromlinie werden als I(i)SLM und I(i+1)SLM bezeichnet. Die normierten Profiltiefen ergeben sich zu:

$$ln(i) = I(i) / I(i)SLM \quad und \quad ln(i+1) = I(i+1) / I(i+1)SLM.$$

Das Profiltiefenverhältnis PTV ist definiert als: PTV = I(i) / I(i+1). Der Wert des Profiltiefenverhältnisses PTV an der mittleren Meridionalstromlinie wird als PTVSLM bezeichnet. Das relative Profiltiefenverhältnis PTVr ist definiert gemäß:

$$PTVr = PTV / PTVSLM$$

Die additive Profiltiefe Iadd ist definiert gemäß: Iadd = I(i) + I(i+1).

Der Wert der additiven Profiltiefe Iadd an der mittleren Meridionalstromlinie wird als IaddSLM bezeichnet. Die normierten additive Profiltiefe ergibt sich zu:

$$Iaddn = Iadd / IaddSLM.$$

Der Staffelungswinkel der vorderen Schaufel lambda(i) ($\lambda$i) ist definiert als der Neigungswinkel der Sehne der vorderen Schaufel S(i) gegen die Meridionalrichtung m. Der Staffelungswinkel der hinteren Schaufel lambda(i+1) ($\lambda$i+1) ist definiert als der Neigungswinkel der Sehne der hinteren Schaufel S(i+1) gegen die Meridionalrichtung m. Der mittlere Staffelungswinkel lambdam ($\lambda$m) ist definiert als Mittelwert der Staffelungswinkel lambda(i) und lambda(i+1) gemäß: lambdam = (lambda(i)+lambda(i+1)) /2.

Die Koordinatenrichtung s ist mit lambdam gegen die Meridionalrichtung m geneigt und zeigt stromabwärts. Die Koordinatenrichtung q steht senkrecht auf s und ist weggehend von der Druckseite der Schaufel (i) orientiert. Die Koordinatenrichtung or steht senkrecht auf s und q.

Die effektive Profilsehne leff ist gegeben als der Abstand zwischen der Vorderkante der Schaufel (i) und der Hinterkante der Schaufel (i+1) gemessen parallel zur Koordinatenrichtung s.

Der Wert der effektiven Profiltiefe leff an der mittleren Meridionalstromlinie wird als leffSLM bezeichnet. Die normierten effektive Profiltiefe ergibt sich zu: leffn = leff / leffSLM

Die Frontschaufelteilung t(i) ist definiert als der Abstand zweier benachbarter Schaufeln der Schaufelreihe (i) in deren Hinterkantenebene in Umfangsrichtung u.

Der meridionale Eingriff e wird parallel zur Richtung der Meridionalkoordinate m von der Vorderkante einer Schaufel (i+1) zu der Hinterkante einer Schaufel (i) gemessen und hat gegen die Meridionalströmungsrichtung positives Vorzeichen.

Für die Definition der Ansicht B-B wird davon ausgegangen, dass der in Fig.5 dargestellte Meridionalstromlinienschaufelschnitt sich an der mittleren Meridionalstromlinie SLM befindet. Die durch die Koordinatenrichtung s gekennzeichnete mittlere Sehnenrichtung ist repräsentativ für die örtliche Hauptströmungsrichtung im strömungsmechanischen Interferenzbereich der Schaufeln (i) und (i+1). Daher ist ein fester Bezug zu dieser ausgewiesenen und bedeutsamen mittleren Sehnenrichtung essentiell für eine strömungsmechanisch treffende Festlegung von Ausprägungsmerkmalen einer Schaufelreihengruppe. Die effektive Profiltiefe leff ist aus diesem Grunde im Koordinatsystem (s-q) der mittleren Sehnenrichtung und ihrer Orthogonalen definiert. Zusätzlich können in der Ansicht B-B alle Schaufelkanten der Gruppe hinsichtlich ihrer strömungsmechanischen Wirkung sinvoll beurteilt und beschrieben werden.

Die Ansicht B-B erfolgt tangential zur Mittelschnittsmeridionalstromfläche (Kegelfläche um die Maschinenachse) und senkrecht zu der durch die Koordinatenrichtung s gekennzeichneten mittleren Sehnenrichtung der Schaufelanordnung im mittleren Meridionalstromlinienschaufelschnitt.

Im Weiteren werden erfindungsgemäße Festlegungen zu den Eigenschaften der unterschiedlichen Profiltiefenparameter der Schaufelreihengruppe gemacht. Dabei sind für den Bereich 2-dimensionaler Strömung um den mittleren Meridionalstromlinienschnitt SLM und den Bereich 3-dimensionaler Strömung um die Hauptströmungspfadberandung HB unterschiedlich zu behandeln, und dies unter der besonderen Bedingung, dass zwei Schaufelreihen bei starker gegenseitiger Potentialfeldbeeinflussung in einer Gruppe nah zusammen stehen, und sich auf diese Weise von Einzelschaufelreihen insbesondere hinsichtlich einer vorteilhaften Auswahl der Profiltiefenparameter grundsätzlich unterscheiden müssen.

Wegen der gegenseitigen Potentialwirkung der Mitgliedschaufelreihen untereinander nimmt eine hohe Profiltiefe, angewendet im Bereich der Hauptströmungspfadberandung, eine wichtige Rolle ein. Durch eine Profiltiefenerhöhung zur Hauptströmungspfadberandung hin kann die nötige zusätzliche aerodynamische Stützwirkung erreicht werden.

Ausgehend von einem Profiltiefenwert in der Mitte des Hauptströmungspfades werden im Weiteren Festlegungen für Profiltiefenwerte in Richtung der Hauptströmungspfadberandung HB gemacht. Dies geschieht mit Hilfe der normierten Profiltiefen.

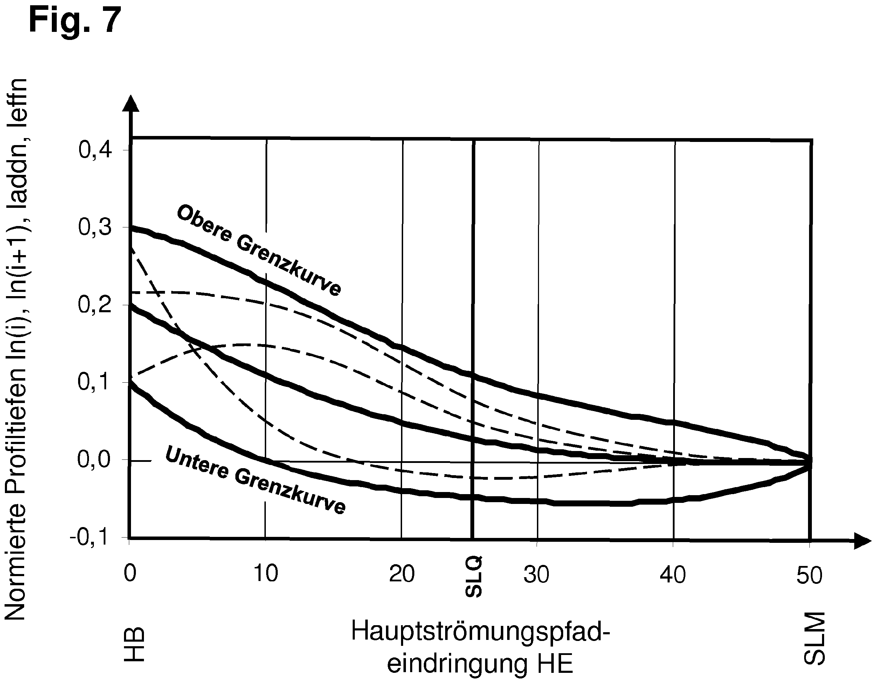

Die Fig. 7 zeigt einige erfindungsgemäß mögliche Formen des Verlaufes der normierten Profiltiefen, aufgetragen über der Hauptströmungspfadeindringung HE.

Es ist erfindungsgemäß günstig für eine Schaufelreihengruppe, wenn wenigstens eine der normierten Profiltiefen In(i), In(i+1), laddn und leffn der Schaufelreihenpaarung (i) und (i+1) im Bereich zwischen der mittleren Meridionalstromlinie SLM und der Hauptströmungspfadberandung HB in Richtung der HB wenigstens lokal ansteigt und an der HB einen Wert von größergleich 1,1 annimmt, entsprechend einer mindestens 10%igen Profiltiefenerhöhung gegenüber dem Wert an der SLM.

Besonders günstig ist ein Wert wenigstens einer der normierten Profiltiefen an der Hauptströmungspfadberandung HB im Bereich 1,15 < In < 1,20. In speziellen Anwendungsfällen, insbesondere unter festigkeitemäßig entspannten Bedingungen, kann auch ein Wert wenigstens einer der normierten Profiltiefen an der Hauptströmungspfadberandung HB im Bereich 1,2 < In < 1,3 vorteilhaft sein.

Es kann weiterhin vorteilhaft sein, wenn wenigstens eines der folgenden qualitativen Merkmale des Verlaufes (wenigstens einer der normierten Profiltiefen In(i), In(i+1), laddn und leffn) längs der Schaufelhöhe vorgesehen ist:

A) ein im wesentlichen oder exakt konstanter Verlauf in einem Teilbereich zwischen SLM und HB, wobei es vorteilhaft sein kann, wenn

    a.) der Teilbereich an die SLM angrenzt, oder
    b.) der Teilbereich an die HB angrenzt

B) ein im wesentlichen oder exakt linearer Anstieg in Richtung der HB, in wenigstens einem Teilbereich zwischen SLM und HB, wobei es vorteilhaft sein kann, wenn

    a.) der Teilbereich an die SLM angrenzt, oder
    b.) der Teilbereich an die HB angrenzt, oder
    c.) der Teilbereich nicht an die SLM und nicht an die HB angrenzt, oder
    d.) der gesamte Bereich zwischen SLM und HB betroffen ist

C) ein progressiver Anstieg in Richtung der HB, in wenigstens einem Teilbereich zwischen SLM und HB, wobei es vorteilhaft sein kann, wenn

    a.) der Teilbereich an die SLM angrenzt, oder
    b.) der Teilbereich an die HB angrenzt, oder
    c.) der Teilbereich nicht an die SLM und nicht an die HB angrenzt, oder
    d.) der gesamte Bereich zwischen SLM und HB betroffen ist

D) ein degressiver Anstieg in Richtung der HB, in wenigstens einem Teilbereich zwischen SLM und HB, wobei es vorteilhaft sein kann, wenn

    a.) der Teilbereich an die HB angrenzt, oder
    b.) der Teilbereich nicht an die SLM und nicht an die HB angrenzt

E) eine Abnahme in Richtung der HB, in einem Teilbereich zwischen SLM und HB, wobei

    a.) der Teilbereich an die SLM angrenzt, oder

b.) der Teilbereich an die HB angrenzt, oder

c.) der Teilbereich nicht an die SLM und nicht an die HB angrenzt.

F) die Ausprägung eines Minimums im Bereich zwischen SLM und HB (nicht an SLM oder HB),

G) die Ausprägung eines Maximums im Bereich zwischen SLM und HB (nicht an SLM oder HB),

Weitere Vorteile entstehen wenn eine der folgenden Merkmalskombinationen des Verlaufes von der SLM zur HB vorgesehen werden:

H) ein progressiver Anstieg, dann ein im wesentlichen oder exakt linearer Anstieg bis zur HB,

I) ein progressiver Anstieg, dann ein degressiver Anstieg bis zur HB,

J) ein im wesentlichen oder exakt linearer Anstieg, dann ein progressiver Anstieg bis zur HB,

K) ein im wesentlichen oder exakt linearer Anstieg, dann ein progressiver Anstieg, dann ein im wesentlichen oder exakt linearer Anstieg bis zur HB,

L) ein im wesentlichen oder exakt linearer Anstieg, dann ein progressiver Anstieg, dann ein degressiver Anstieg bis zur HB.

M) ein im wesentlichen oder exakt konstanter Verlauf, dann ein progressiver Anstieg bis zur HB,

N) ein im wesentlichen oder exakt konstanter Verlauf, dann ein progressiver Anstieg, dann ein im wesentlichen oder exakt linearer Anstieg bis zur HB,

O) ein im wesentlichen oder exakt konstanter Verlauf, dann ein progressiver Anstieg, dann ein degressiver Anstieg bis zur HB,

P) eine Abnahme, dann ein Minimum, dann ein progressiver Anstieg bis zur HB, oder

Q) eine Abnahme, dann ein Minimum, dann ein progressiver Anstieg, dann ein degressiver Anstieg bis zur HB.

Es ist bei den erfindungsgemäßen Verläufen weiterhin von Vorteil, wenn für wenigstens eine der normierten Profiltiefen gilt, dass bei einer Hauptströmungspfadeindringung von 25% (an der Viertelmeridionalstromlinie SLQ) lediglich ein kleiner Anteil des Zuwachses gegenüber dem Wert an der mittleren Meridionalstromlinie SLM vorgesehen ist, gemäß: (ln bei SLQ) <= ((ln max) -1) * 0,3) + 1; dabei heißt <= gleichergleich

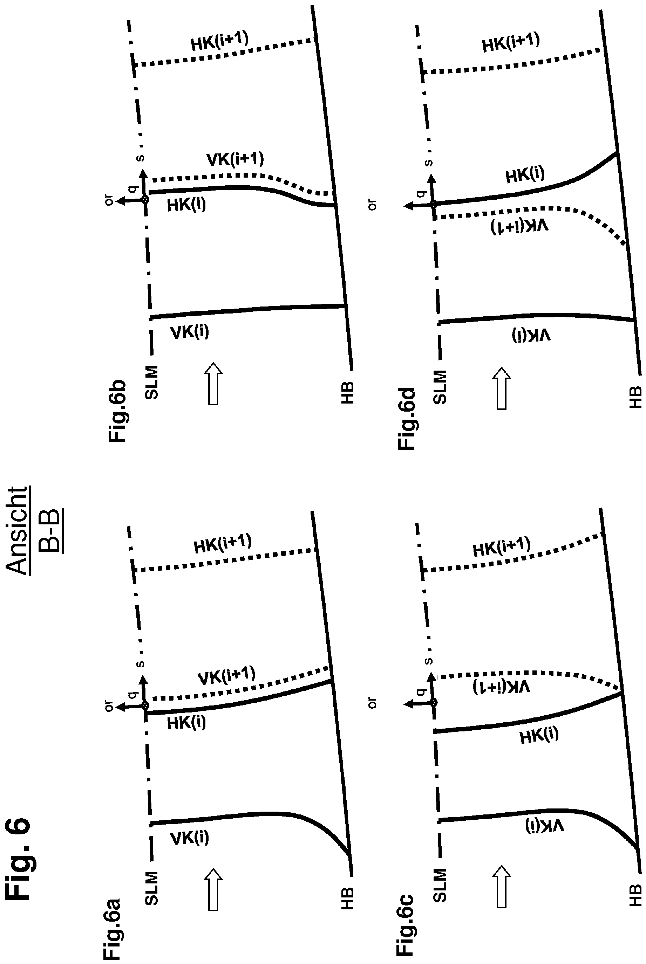

Es ist weiterhin günstig, wenn wenigstens eine der voranstehenden Festlegungen zur Profiltiefe gleichzeitig für die normierten Profiltiefen ln(i) und ln(i+1) vorgesehen sind. Eine mögliche erfindungsgemäße Schaufelanordnung zeigt die Fig. 6, Teilfiguren 6c, 6d. Dabei kann es vorteilhaft sein, wenn die normierte effektive Profiltiefe leffn innerhalb einer Toleranz von +/-2% ihres Wertes an der mittleren Meridionalstromlinie (leffnSLM) im Bereich zwischen der SLM und der HB gleichbleibend verläuft. Eine mögliche erfindungsgemäße Schaufelanordnung zeigt die Fig. 6, Teilfigur 6d.

Es ist alternativ günstig, wenn wenigstens eine der voranstehenden Festlegungen gleichzeitig für die normierten Profiltiefen ln(i), ln(i+1) und leffn vorgesehen sind. Eine mögliche erfindungsgemäße Schaufelanordnung zeigt die Fig. 6, Teilfigur 6c.

Es ist alternativ günstig, wenn die voranstehenden Festlegungen nur für die normierten Profiltiefe ln(i) vorgesehen sind und die normierte Profiltiefe ln(i+1) an der Hauptströmungspfadberandung HB kleiner ist als an der mittleren Meridionalstromlinie SLM. Eine mögliche erfindungsgemäße Schaufelanordnung zeigt die Fig. 6, Teilfigur 6a. Dabei kann es vorteilhaft sein, wenn die normierte effektive Profiltiefe leffn innerhalb einer Toleranz von +/-2% ihres Wertes an der mittleren Meridionalstromlinie (leffnSLM) im Bereich zwischen der mittleren Meridionalstromlinie SLM und der Hauptströmungspfadberandung HB gleichbleibend verläuft. Dabei kann es zusätzlich vorteilhaft sein, wenn die normierte additive Profiltiefe laddn innerhalb einer Toleranz von +/-2% ihres Wertes an der mittleren Meridionalstromlinie (laddnSLM) im Bereich zwischen der mittleren Meridionalstromlinie SLM und der Hauptströmungspfadberandung HB gleichbleibend verläuft.

Es ist alternativ günstig, wenn die voranstehenden Festlegungen nur für die normierten Profiltiefe ln(i+1) der Schaufeln (i+1) einer hinteren Schaufelreihe vorgesehen sind und die normierte Profiltiefe ln(i) an der Hauptströmungspfadberandung HB kleiner ist als an der SLM. Eine mögliche erfindungsgemäße Schaufelanordnung zeigt die Fig. 6, Teilfigur 6b. Dabei kann es vorteilhaft sein, wenn die normierte effektive Profiltiefe leffn innerhalb einer Toleranz von +/-2% ihres Wertes an der mittleren Meridionalstromlinie (leffnSLM) im Bereich zwischen der mittleren Meridionalstromlinie SLM und der Hauptströmungspfadberandung HB gleichbleibend verläuft. Dabei kann es zusätzlich vorteilhaft sein, wenn die normierte additive Profiltiefe laddn innerhalb einer Toleranz von +/-2% ihres Wertes an der mittleren Meridionalstromlinie (laddnSLM) im Bereich zwischen der mittleren Meridionalstromlinie SLM und der Hauptströmungspfadberandung HB gleichbleibend verläuft.

Bezüglich der Profiltiefen einer Schaufelreihengruppe ist es weiterhin von Vorteil, wenn gemäß der Figur 7 die Verteilung wenigstens einer der normierten Profiltiefen In(i), In(i+1), laddn und leffn der Schaufelreihenpaarung (i) und (i+1) im Bereich zwischen der mittleren Meridionalstromlinie SLM und der Hauptströmungspfadberandung HB über der Hauptströmungspfadeindringung HE gänzlich unterhalb einer oberen Grenzkurve Ino und gänzlich oberhalb einer unteren Grenzkurve Inu verläuft, wobei die obere Grenzkurve gegeben ist durch:

$$Ino = -2 \cdot 10^{-7}(HE)^4 + 2 \cdot 10^{-5}(HE)^3 - 0{,}0004 \cdot (HE)^2 - 0{,}004(HE) + 0{,}3$$

und die untere Grenzkurve gegeben ist durch:

$$Inu = 1 \cdot 10^{-7}(HE)^4 - 1 \cdot 10^{-5}(HE)^3 - 0{,}0007 \cdot (HE)^2 - 0{,}0154(HE) + 0{,}1.$$

Es ist weiterhin günstig, wenn die normierten Profiltiefen In(i) und In(i+1) gleichzeitig gänzlich zwischen den Grenzkurven vorgesehen sind. Dabei kann es vorteilhaft sein, wenn auch die normierte effektive Profiltiefe leffn gänzlich zwischen den Grenzkurven vorgesehen ist.

Es ist alternativ günstig, wenn nur die normierten Profiltiefe In(i) gänzlich zwischen den Grenzkurven vorgesehen sind und die normierte Profiltiefe In(i+1) höchsten teilweise zwischen den Grenzkurven vorgesehen ist. Dabei kann es vorteilhaft sein, wenn die normierte effektive Profiltiefe leffn innerhalb einer Toleranz von +/-2% ihres Wertes an der mittleren Meridionalstromlinie (leffnSLM) im Bereich zwischen der mittleren Meridionalstromlinie SLM und der Hauptströmungspfadberandung HB gleichbleibend verläuft. Dabei kann es zusätzlich vorteilhaft sein, wenn die normierte additive Profiltiefe laddn innerhalb einer Toleranz von +/-2% ihres Wertes an der mittleren Meridionalstromlinie (laddnSLM) im Bereich zwischen der mittleren Meridionalstromlinie SLM und der Hauptströmungspfadberandung HB gleichbleibend verläuft.

Es ist alternativ günstig, wenn nur die normierten Profiltiefe In(i+1) gänzlich zwischen den Grenzkurven vorgesehen sind und die normierte Profiltiefe In(i) höchsten teilweise zwischen den Grenzkurven vorgesehen ist. Dabei kann es vorteilhaft sein, wenn die normierte effektive Profiltiefe leffn innerhalb einer Toleranz von +/-2% ihres Wertes an der mittleren Meridionalstromlinie (leffnSLM) im Bereich zwischen der mittleren Meridionalstromlinie SLM und der Hauptströmungspfadberandung HB gleichbleibend verläuft. Dabei kann es zusätzlich vorteilhaft sein, wenn die normierte additive Profiltiefe laddn innerhalb einer Toleranz von +/-2% ihres Wertes an der mittleren Meridionalstromlinie (laddnSLM) im Bereich zwischen der mittleren Meridionalstromlinie SLM und der Hauptströmungspfadberandung HB gleichbleibend verläuft.

Es kann weiterhin günstig sein, wenn die Verteilung wenigstens einer der normierten Profiltiefen In(i), In(i+1), laddn und leffn der Schaufelreihenpaarung (i) und (i+1) im Bereich zwischen der mittleren Meridionalstromlinie SLM und der Hauptströmungspfadberandung HB innerhalb eines Bandes um eine Zentralverteilung Inc definiert ist, gemäß:
Inc - 0,05 < In < Inc + 0,05, wobei In die normierte Profiltiefe bezeichnet,
wobei gilt:

$$Inc = -1 \cdot 10^{-8}(HE)^4 + 3 \cdot 10^{-7}(HE)^3 + 0{,}0001 \cdot (HE)^2 - 0{,}0105\,(HE) + 0{,}2$$

Es ist weiterhin günstig, wenn die normierten Profiltiefen In(i) und In(i+1) gleichzeitig gänzlich innerhalb des Bandes vorgesehen sind. Dabei kann es vorteilhaft sein, wenn auch die normierte effektive Profiltiefe leffn gänzlich innerhalb des Bandes vorgesehen ist.

Es ist alternativ günstig, wenn nur die normierten Profiltiefe In(i) gänzlich innerhalb des Bandes vorgesehen ist und die normierte Profiltiefe In(i+1) höchsten teilweise innerhalb des Bandes vorgesehen ist. Dabei kann es vorteilhaft sein, wenn die normierte effektive Profiltiefe leffn innerhalb einer Toleranz von +/-2% ihres Wertes an der mittleren Meridionalstromlinie (leffnSLM) im Bereich zwischen der mittleren Meridionalstromlinie SLM und der Hauptströmungspfadberandung HB gleichbleibend verläuft. Dabei kann es zusätzlich vorteilhaft sein, wenn die normierte additive Profiltiefe laddn innerhalb einer Toleranz von +/-2% ihres Wertes an der mittleren Meridionalstromlinie (laddnSLM) im Bereich zwischen der mittleren Meridionalstromlinie SLM und der Hauptströmungspfadberandung HB gleichbleibend verläuft.

Es ist alternativ günstig, wenn nur die normierten Profiltiefe In(i+1) gänzlich innerhalb des Bandes vorgesehen ist und die normierte Profiltiefe In(i) höchsten teilweise innerhalb des Bandes vorgesehen ist. Dabei kann es vorteilhaft sein, wenn die normierte effektive Profiltiefe Ieffn innerhalb einer Toleranz von +/-2% ihres Wertes an der mittleren Meridionalstromlinie (IeffnSLM) im Bereich zwischen der mittleren Meridionalstromlinie SLM und der Hauptströmungspfadberandung HB gleichbleibend verläuft. Dabei kann es zusätzlich vorteilhaft sein, wenn die normierte additive Profiltiefe Iaddn innerhalb einer Toleranz von +/-2% ihres Wertes an der mittleren Meridionalstromlinie (IaddnSLM) im Bereich zwischen der mittleren Meridionalstromlinie SLM und der Hauptströmungspfadberandung HB gleichbleibend verläuft.

Ebenfalls von Bedeutung im Zusammenhang mit den Profiltiefen einer Schaufelreihensgruppe ist die Aufteilung der aerodynmaischen Last auf die Profile der Mitgliedschaufelreihen (i) und (i+1). Unter anderen Parametern ist dafür das Verhältnis der Profiltiefen PTV = I(i) / I(i+1) kennzeichnend.

Es ist erfindungsgemäß günstig, wenn an der mittleren Meridionalstromlinie SLM Werte des Profiltiefenverhältnisses von 0,8 < PTVSLM < 2,0 vorgesehen sind. Dabei ist es vorteilhaft, wenn das Profiltiefenverhältnis im Bereich von 1,0 < PTVSLM < 2,0 vorgesehen ist. Dabei ist es besonders vorteilhaft, wenn das Profiltiefenverhältnis im Bereich von 1,2 < PTVSLM < 1,4 vorgesehen ist. Dabei ergeben Werte im Bereich von 1,15 < PTVSLM < 1,25 weitere Vorteile. Unter baulichen Einschränkungen können auch Werte im Bereich von 1,25 < PTVSLM < 1,35 verbesserte Lösungen ergeben.

Selbige Festlegungen von PTV können erfindungsgemäß für Meridionalstromlinienschnitte in der Nähe der Hauptströmungspfadmitte bei Haupströmungspfadeindringungen von größergleich 30% gelten.

Ausgehend von einem Wert PTVSLM in der Mitte des Hauptströmungspfades werden im Weiteren Festlegungen für PTV in Richtung der Hauptströmungspfadberandung HB gemacht. Dies geschieht mit Hilfe des relativen Profiltiefenverhältnisses PTVr (Quotient des örtlichen Profiltiefenverhältnisses und des Wertes an der mittleren Meridionalstromline SLM).

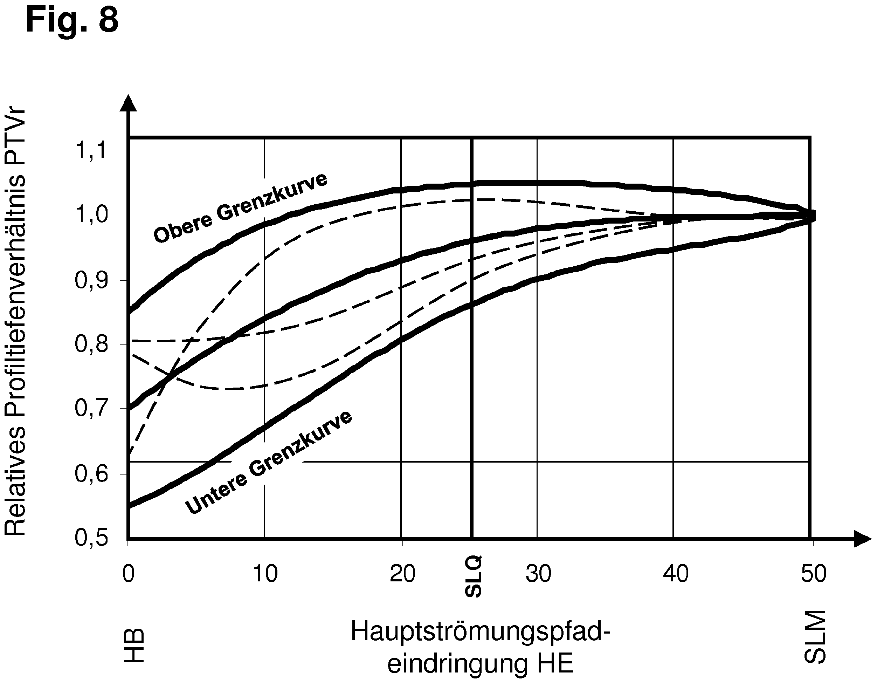

Die Fig. 8 zeigt einige erfindungsgemäß mögliche Formen des Verlaufes des relativen Profiltiefenverhältnisses PTVr, aufgetragen über der Hauptströmungspfadeindringung HE.

Es ist erfindungsgemäß günstig für eine Schaufelreihengruppe, wenn das relative Profiltiefenverhältnis PTVr im Bereich zwischen der mittleren Meridionalstromlinie SLM und der Hauptströmungspfadberandung HB in Richtung der Hauptströmungspfadberandung HB wenigstens lokal abnimmt und an der HB einen Wert von kleinergleich 0,85 annimmt, entsprechend einer mindestens 15%igen Reduktion gegenüber dem Wert an der SLM.

Besonders günstig ist ein Wert des relativen Profiltiefenverhältnisses an der HB im Bereich 0,8 > PTVr > 0,6. In speziellen Anwendungsfällen, insbesondere unter festigkeitsmäßig entspannten Bedingungen, kann auch ein Wert des relativen Profiltiefenverhältnisses an der HB im Bereich 0,6 > PTVr > 0,55 vorteilhaft sein.

Es kann weiterhin vorteilhaft sein, wenn wenigstens eines der folgenden qualitativen Merkmale des Verlaufes des relativen Profiltiefenverhältnisses PTVr längs Schaufelhöhe vorgesehen ist:

A) ein im wesentlichen oder exakt konstanter Verlauf in einem Teilbereich zwischen SLM und HB, wobei es vorteilhaft sein kann, wenn

a.) der Teilbereich an die SLM angrenzt, oder
b.) der Teilbereich an die HB angrenzt

B) eine im wesentlichen oder exakt lineare Abnahme in Richtung der HB, in wenigstens einem Teilbereich zwischen SLM und HB, wobei es vorteilhaft sein kann, wenn

a.) der Teilbereich an die SLM angrenzt, oder
b.) der Teilbereich an die HB angrenzt, oder
c.) der Teilbereich nicht an die SLM und nicht an die HB angrenzt, oder
d.) der gesamte Bereich zwischen SLM und HB betroffen ist

C) eine progressiver Abnahme in Richtung der HB, in wenigstens einem Teilbereich zwischen SLM und HB, wobei es vorteilhaft sein kann, wenn

a.) der Teilbereich an die SLM angrenzt, oder
b.) der Teilbereich an die HB angrenzt, oder
c.) der Teilbereich nicht an die SLM und nicht an die HB angrenzt, oder
d.) der gesamte Bereich zwischen SLM und HB betroffen ist

D) eine degressive Abnahme in Richtung der HB, in wenigstens einem Teilbereich zwischen SLM und HB, wobei es vorteilhaft sein kann, wenn

    a.) der Teilbereich an die HB angrenzt, oder
    b.) der Teilbereich nicht an die SLM und nicht an die HB angrenzt

E) ein Anstieg in Richtung der HB, in einem Teilbereich zwischen SLM und HB, wobei

    a.) der Teilbereich an die SLM angrenzt, oder
    b.) der Teilbereich an die HB angrenzt, oder
    c.) der Teilbereich nicht an die SLM und nicht an die HB angrenzt.

F) die Ausprägung eines Maximums im Bereich zwischen SLM und HB (nicht an SLM oder HB),
G) die Ausprägung eines Minimums im Bereich zwischen SLM und HB (nicht an SLM oder HB),

Weitere Vorteile entstehen, wenn eine der folgenden Merkmalskombinationen des PTVr - Verlaufes von der SLM zur HB vorgesehen werden:

H) eine progressive Abnahme, dann eine im wesentlichen oder exakt lineare Abnahme bis zur HB,

I) eine progressive Abnahme, dann eine degressive Abnahme bis zur HB,

J) eine im wesentlichen oder exakt lineare Abnahme, dann eine progressive Abnahme bis zur HB,

K) eine im wesentlichen oder exakt lineare Abnahme, dann eine progressive Abnahme, dann eine im wesentlichen oder exakt lineare Abnahme bis zur HB,

L) eine im wesentlichen oder exakt lineare Abnahme, dann eine progressive Abnahme, dann eine degressive Abnahme bis zur HB,

M) ein im wesentlichen oder exakt konstanter Verlauf, dann eine progressive Abnahme bis zur HB,

N) ein im wesentlichen oder exakt konstanter Verlauf, dann eine progressive Abnahme, dann eine im wesentlichen oder exakt lineare Abnahme bis zur HB,

O) ein im wesentlichen oder exakt konstanter Verlauf, dann eine progressive Abnahme, dann eine degressive Abnahme bis zur HB,

P) ein Anstieg, dann ein Maximum, dann eine progressive Abnahme bis zur HB,

Q) ein Anstieg, dann ein Maximum, dann eine progressive Abnahme, dann eine degressive Abnahme bis zur HB.

Es ist bei den erfindungsgemäßen PTVr - Verläufen weiterhin von Vorteil, wenn gilt, dass bei einer Hauptströmungspfadeindringung von 25% (an der Viertelmeridionalstromlinie SLQ) lediglich ein kleiner Anteil der Abnahme gegenüber dem Wert an der mittleren Meridionalstromlinie SLM vorgesehen ist, gemäß:

$$(PTVr\ bei\ SLQ) >= 1 - (1 - (PTVr\ max)) * 0{,}3;$$

dabei heißt >= größergleich

Es ist weiterhin günstig, wenn das relative Profiltiefenverhältnis PTVr der Schaufelreihenpaarung (i) und (i+1) gemäß der Figur 8 im Bereich zwischen der mittleren Meridionalstromlinie SLM und der Hauptströmungspfadberandung HB, aufgetragen über der Hauptströmungspfadeindringung HE, gänzlich unterhalb einer oberen Grenzkurve PTVro und gänzlich oberhalb einer unteren Grenzkurve PTVru verläuft, wobei die obere Grenzkurve gegeben ist durch:

$$PTVro = -8 \cdot 10^{-8}(HE)^4 + 1 \cdot 10^{-5}(HE)^3 - 0{,}0007 \cdot (HE)^2 + 0{,}0194(HE) + 0{,}85$$

und die untere Grenzkurve gegeben ist durch:

$$PTVru = 2 \cdot 10^{-7}(HE)^4 - 2 \cdot 10^{-5}(HE)^3 + 0{,}0006 \cdot (HE)^2 + 0{,}0081(HE) + 0{,}55.$$

Es kann weiterhin günstig sein, wenn die Verteilung des relativen Profiltiefenverhältnisses PTVr im Bereich zwischen der mittleren Meridionalstromlinie SLM und der Hauptströmungspfadberandung HB innerhalb eines Bandes um eine Zentralverteilung PTVrc definiert ist, gemäß:

$$PTVrc - 0{,}05 \; < \; \ln \; < \; PTVrc + 0{,}05,$$

wobei gilt:

$$PTVrc = 2 \cdot 10^{-8}(HE)^4 + 1 \cdot 10^{-8}(HE)^3 - 0{,}0003 \cdot (HE)^2 + 0{,}0165(HE) + 0{,}7.$$

Weiterhin vorteilhaft kann es sein, wenn in wenigstens einem an eine der Hauptströmungspfadberandungen (Nabe und Gehäuse) angrenzenden Bereich der Schaufelhöhe zwischen dem vorderen Abschnitt der Saugseite einer Schaufel einer Mitgliedsschaufelreihe (i+1) und dem hinteren Abschnitt der Druckseite einer Schaufel einer Mitgliedsschaufelreihe (i) eine Nebenpassage vorgesehen ist, die die Strömung örtlich führt und das Interferenzverhalten der Mitgliedschaufelreihen (i) und (i+1) entlang der Schaufelhöhe günstig abstimmt.

Die vorliegende Figurenbeschreibung beschreibt die normierten Profiltiefen zwischen der mittleren Meridionalstromlinie (SLM) und einer der Hauptströmungspfadberandungen (HB). Zur anderen der beiden Hauptströmungspfadberandungen kann ausgehend von der mittleren Meridionalstromlinie (SLM) ein entsprechender Verlauf der normierten Profiltiefen realisiert sein, wobei - bezogen auf die mittlere Meridionalstromlinie (SLM) - sowohl symmetrische und asymmetrische Verläufe der normierten Profiltiefe realisiert sein können.

So kann sich ein vorteilhaftes Strömungsverhalten in einer erfindungsgemäßen Schaufelgruppe ergeben, wenn im Bereich der Schaufelenden an Nabe und Gehäuse angrenzend an die jeweilige Hauptströmungspfadberandung jeweils wenigstens eines der im obigen Text beschriebenen Merkmale vorgesehen ist. Dabei kann vorgesehen sein, dass im Bereich der Nabe und des Gehäuses mindestens ein gleiches Merkmal oder auch vollständig gleiche Merkmale vorgesehen sind.

**Patentansprüche**

1. Schaufelreihengruppe anordbar in einem Hauptströmungspfad einer Strömungsmaschine und bestehend aus N benachbarten und sowohl in Meridionalrichtung (m) als auch in Umfangsrichtung (u) relativ zueinander fest angeordneten Mitgliedsschaufelreihen, wobei die Anzahl N der Mitgliedsschaufelreihen größer gleich 2 ist und (i) den Laufindex mit Werten zwischen 1 und N kennzeichnet, wobei eine vordere Mitgliedsschaufelreihe mit vorderen Schaufeln (i) mit Vorderkante und Hinterkante sowie eine hintere Mitgliedsschaufelreihe mit hinteren Schaufeln (i+1) mit Vorderkante und Hinterkante gegeben sind, wobei

- die Schaufelreihengruppe zwei Hauptströmungspfadberandungen (HB) aufweist,
- in jedem Meridionalstromlinienschnitt (m-u-Ebene) durch die Schaufelgruppe die Sehne der vorderen Schaufel Se(i) und die Sehne der hinteren Schaufel Se(i+1) als die druckseitig an das jeweilige Profil angelegte Tangente gegeben ist,
- die Profiltiefe I(i) der vorderen Schaufel und die Profiltiefe I(i+1) der hinteren Schaufel in Richtung der jeweiligen Sehne gegeben ist,
- die Werte der Profiltiefen I(i) und I(i+1) an der mittleren Meridionalstromlinie als I(i)SLM und I(i+1)SLM bezeichnet werden,
- die normierten Profiltiefen In(i) der vorderen Schaufel und In(i+1) der hinteren Schaufel als In(i) = I(i) / I(i)SLM und In(i+1) = I(i+1) / I(i+1)SLM definiert sind,
- das Profiltiefenverhältnis PTV der vorderen und hinteren Schaufel als PTV = I(i) / I(i+1) definiert ist,
- der Wert des Profiltiefenverhältnisses PTV an der mittleren Meridionalstromlinie als PTVSLM bezeichnet wird, und das relative Profiltiefenverhältnis PTVr gemäß PTVr = PTV / PTVSLM definiert ist,
- die additive Profiltiefe Iadd der vorderen und hinteren Schaufel gemäß Iadd = I(i) + I(i+1) definiert ist,

- der Wert der additiven Profiltiefe ladd an der mittleren Meridionalstromlinie als laddSLM bezeichnet wird,
- die normierte additive Profiltiefe als laddn = ladd / laddSLM definiert ist,
- der Staffelungswinkel der vorderen Schaufel lambda(i) und der Staffelungswinkel der hinteren Schaufel lambda(i+1) als Neigungswinkel der jeweiligen Sehne gegen die Meridionalrichtung m definiert sind,
- der mittlere Staffelungswinkel lambdam als Mittelwert der Staffelungswinkel lambda(i) und lambda(i+1) definiert ist, gemäß lambdam = (lambda(i)+lambda(i+1)) / 2,
- in jedem Hinterkantenpunkt der vorderen Schaufel (i) ein Hilfskoordinatensystem mit einer ersten, einer zweiten und einer dritten Koordinatenrichtung (s, q, or) gegeben ist, die erste Koordinatenrichtung (s) unter dem Winkel lambdam gegen die Meridionalrichtung m stromabwärts weist, die zweite Koordinatenrichtung (q) senkrecht zur ersten Koordinatenrichtung (s) von der Druckseite der vorderen Schaufel (i) weg weist, und die dritte Koordinatenrichtung (or) senkrecht auf der ersten Koordinatenrichtung (s) und der zweiten Koordinatenrichtung (q),
- die effektive Profiltiefe leff als der Abstand zwischen der Vorderkante der vorderen Schaufel (i) und der Hinterkante der hinteren Schaufel (i+1) parallel zur ersten Koordinatenrichtung (s) gemessen wird,
- der Wert der effektiven Profiltiefe leff an der mittleren Meridionalstromlinie als leffSLM bezeichnet wird, und
- die normierte effektive Profiltiefe leffn der vorderen und hinteren Schaufel gemäß leffn = leff / leffSLM definiert ist,

**dadurch gekennzeichnet, dass**
wenigstens eine der normierten Profiltiefen In, nämlich die normierte Profiltiefe In(i) der vorderen Schaufel, die normierte Profiltiefe In(i+1) der hinteren Schaufel, die normierte additive Profiltiefe laddn und/oder die normierte effektive Profiltiefe leffn einer Schaufelreihenpaarung im Bereich zwischen der mittleren Meridionalstromlinie (SLM) und mindestens einer der Hauptströmungspfadberandungen (HB) in Richtung der Hauptströmungspfadberandung (HB) wenigstens lokal ansteigt.

2. Schaufelreihengruppe nach Anspruch 1, **dadurch gekennzeichnet, dass** die Verteilung wenigstens eine der besagten normierten Profiltiefen In im Bereich zwischen der mittleren Meridionalstromlinie (SLM) und der Hauptströmungspfadberandung (HB) über der Hauptströmungspfadeindringung (HE) gänzlich unterhalb einer oberen Grenzkurve Ino und gänzlich oberhalb einer unteren Grenzkurve Inu verläuft, wobei die obere Grenzkurve Ino gegeben ist durch:

$$Ino = -2 \cdot 10^{-7}(HE)^4 + 2 \cdot 10^{-5}(HE)^3 - 0{,}0004 \cdot (HE)^2 - 0{,}004(HE) + 0{,}3$$

und die untere Grenzkurve Inu gegeben ist durch:

$$Inu = 1 \cdot 10^{-7}(HE)^4 - 1 \cdot 10^{-5}(HE)^3 - 0{,}0007 \cdot (HE)^2 - 0{,}0154(HE) + 0{,}1.$$

3. Schaufelreihengruppe nach Anspruch 1 oder 2, **dadurch gekennzeichnet, dass** die Verteilung wenigstens einer der besagten normierten Profiltiefen im Bereich zwischen der mittleren Meridionalstromlinie (SLM) und der Hauptströmungspfadberandung (HB) innerhalb eines engen Bandes um eine Zentralverteilung Inc definiert ist, gemäß:

Inc - 0,05  <  In  <  Inc + 0,05,

wobei gilt:

$$Inc = -1 \cdot 10^{-8}(HE)^4 + 3 \cdot 10^{-7}(HE)^3 + 0{,}0001 \cdot (HE)^2 - 0{,}0105\,(HE) + 0{,}2$$

4. Schaufelreihengruppe nach einem der vorangehenden Ansprüche, **dadurch gekennzeichnet, dass** wenigstens eines der Merkmale gemäß der Ansprüche 1 bis 3 gleichzeitig für die normierte Profiltiefe In(i) der vorderen Schaufel und die normierte Profiltiefe In(i+1) der hinteren Schaufel vorgesehen sind und/oder wenigstens eines der Merkmale gemäß der Ansprüche 1 bis 3 gleichzeitig für die normierte Profiltiefe In(i) der vorderen Schaufel, die normierte Profiltiefe In(i+1) der hinteren Schaufel und die normierte effektive Profiltiefe leffn vorgesehen sind.

5. Schaufelreihengruppe nach einem der Ansprüche 1 bis 3, **dadurch gekennzeichnet, dass** wenigstens eines der Merkmale gemäß der Ansprüche 1 bis 3 für die normierte Profiltiefe In(i) der vorderen Schaufel, nicht aber für die normierte Profiltiefe In(i+1) der hinteren Schaufel vorgesehen ist, und/oder wenigstens eines der Merkmale gemäß der Ansprüche 1 bis 3 für die normierte Profiltiefe In(i+1) der hinteren Schaufel, nicht aber für die normierte Profiltiefe In(i) der vorderen Schaufel vorgesehen ist.

6. Schaufelreihengruppe nach einem der vorangehenden Ansprüche, **dadurch gekennzeichnet, dass** für wenigstens eine der besagten normierten Profiltiefen In gilt, dass bei einer Hauptströmungspfadeindringung (HE) von 25% (an der Viertelmeridionalstromlinie SLQ) lediglich ein kleiner Anteil des Zuwachses gegenüber dem Wert an der mittleren Meridionalstromlinie (SLM) vorgesehen ist, gemäß: (In bei SLQ) <= ((In max)-1) * 0,3) + 1.

7. Schaufelreihengruppe nach einem der vorangehenden Ansprüche, **dadurch gekennzeichnet, dass** an der mittleren Meridionalstromlinie (SLM) Werte des Profiltiefenverhältnisses im Bereich 0,8 < PTVSLM < 2,0 oder im Bereich 1,2 < PTVSLM < 1,4 vorgesehen sind.

8. Schaufelreihengruppe nach einem der vorangehenden Ansprüche, **dadurch gekennzeichnet, dass** das relative Profiltiefenverhältnis PTVr im Bereich zwischen der mittleren Meridionalstromlinie (SLM) und der Hauptströmungspfadberandung (HB) in Richtung der Hauptströmungspfadberandung (HB) wenigstens lokal abnimmt und an der Hauptströmungspfadberandung (HB) ein Wert von kleinergleich 0,85 vorgesehen ist.

9. Schaufelreihengruppe nach einem der vorangehenden Ansprüche, **dadurch gekennzeichnet, dass** an der Hauptströmungspfadberandung (HB) ein Wert des relativen Profiltiefenverhältnisses PTVr im Bereich 0,8 > PTVr > 0,6 oder im Bereich 0,6 > PTVr > 0,55 vorgesehen ist.

10. Schaufelreihengruppe nach einem der vorangehenden Ansprüche, **dadurch gekennzeichnet, dass** entlang der Schaufelhöhe für das relative Profiltiefenverhältnis PTVr ein im Wesentlichen oder exakt konstanter Verlauf in einem Teilbereich zwischen der mittleren Meridionalstromlinie (SLM) und der Hauptströmungspfadberandung (HB) vorgesehen ist.

11. Schaufelreihengruppe nach einem der vorangehenden Ansprüche, **dadurch gekennzeichnet, dass** bei einer Hauptströmungspfadeindringung von 25% (an der Viertelmeridionalstromlinie SLQ) lediglich ein kleiner Anteil der Abnahme gegenüber dem Wert an der mittleren Meridionalstromlinie SLM vorgesehen ist, gemäß: (PTVr bei SLQ) >= 1 - (1 - (PTVr max)) * 0,3).

12. Schaufelreihengruppe nach einem der vorangehenden Ansprüche, **dadurch gekennzeichnet, dass** das relative Profiltiefenverhältnis PTVr im Bereich zwischen der mittleren Meridionalstromlinie (SLM) und der Hauptströmungspfadberandung (HB), aufgetragen über der Hauptströmungspfadeindringung (HE), gänzlich unterhalb einer oberen Grenzkurve PTVro und gänzlich oberhalb einer unteren Grenzkurve PTVru verläuft, wobei die obere Grenzkurve PTVro gegeben ist durch:

$$PTVro = -8 \cdot 10^{-8}(HE)^4 + 1 \cdot 10^{-5}(HE)^3 - 0{,}0007 \cdot (HE)^2 + 0{,}0194(HE) + 0{,}85$$

und die untere Grenzkurve PTVru gegeben ist durch:

$$PTVru = 2 \cdot 10^{-7}(HE)^4 - 2 \cdot 10^{-5}(HE)^3 + 0{,}0006 \cdot (HE)^2 + 0{,}0081(HE) + 0{,}55.$$

13. Schaufelreihengruppe nach einem der vorangehenden Ansprüche, **dadurch gekennzeichnet, dass** die Verteilung des relativen Profiltiefenverhältnisses PTVr im Bereich zwischen der mittleren Meridionalstromlinie (SLM) und der Hauptströmungspfadberandung (HB) innerhalb eines engen Bandes um eine Zentralverteilung PTVrc definiert ist, gemäß:

$$PTVrc - 0{,}05 < In < PTVrc + 0{,}05,$$

wobei gilt:

$$PTVrc = 2 \cdot 10^{-8}(HE)^4 + 1 \cdot 10^{-8}(HE)^3 - 0{,}0003 \cdot (HE)^2 + 0{,}0165(HE) + 0{,}7.$$

14. Schaufelreihengruppe nach einem der vorangehenden Ansprüche, **dadurch gekennzeichnet, dass** wenigstens in einem an eine der Hauptströmungspfadberandungen angrenzenden Bereich der Schaufelhöhe zwischen dem vorderen Abschnitt der Saugseite einer Schaufel einer Mitgliedsschaufelreihe (i+1) und dem hinteren Abschnitt der Druckseite einer Schaufel einer Mitgliedsschaufelreihe (i) eine Nebenpassage (NP) vorgesehen ist, die die örtliche Strömung zweiseitig führt.

15. Schaufelreihengruppe nach einem der vorangehenden Ansprüche, **dadurch gekennzeichnet, dass** wenigstens eines der Merkmale gemäß der Ansprüche 1 bis 14 gleichzeitig an beiden Schaufelenden beziehungweise Schaufelhälften vorgesehen sind.

**Claims**

1. Blade row group which can be arranged in a main flow path of a turbomachine and which consists of N mutually adjacent member blade rows arranged fixed with respect to one another both in the meridional direction (m) and in the circumferential direction (u), wherein the number N of the member blade rows is greater than or equal to 2 and (i) characterizes the running index with values between 1 and N, wherein a forward member blade row with forward blades (i) having a leading edge and a trailing edge, and a rear member blade row with rear blades (i+1) having a leading edge and a trailing edge are present, wherein

   - the blade row group has two main flow path boundaries (HB),
   - in each meridional streamline section (m-u plane) through the blade group the chord of the forward blade Se(i) and the chord of the rear blade Se(i+1) is taken to be the pressure-side tangent to the respective profile,
   - the chord length I(i) of the forward blade and the chord length I(i+1) of the rear blade is considered in the direction of the respective chord,
   - the values of the chord lengths I(i) and I(i+1) at the middle meridional flow line are labelled I(i)SLM and I(i+1)SLM,
   - the normalized chord lengths In(i) of the forward blade and In(i+1) of the rear blade are defined as In(i)=I(i)/I(i)SLM and In(i+1)=I(i+1)/I(i+1)SLM,
   - the chord length ratio PTV of the forward and rear blades is defined as PTV=I(i)/I(i+1),
   - the value of the chord length ratio PTV at the middle meridional flow line is labelled PTVSLM, and the relative chord length ratio PTVr is defined by PTVr=PTV/PTVSLM,
   - the additive chord length Iadd of the forward and rear blades is defined by Iadd=I(i)+I(i+1),
   - the value of the additive chord length Iadd at the middle meridional flow line is labelled as IaddSLM,
   - the normalized additive chord length is defined as Iaddn=Iadd/IaddSLM,
   - the stagger angle of the forward blade lambda(i) and the stagger angle of the rear blade lambda(i+1) are defined as the angle of inclination of the respective chord to the meridional direction m,
   - the average stagger angle lambdam is defined as the mean value of the stagger angles lambda(i) and lambda(i+1), according to lambdam=(lambda(i)+lambda(i+1))/2,
   - at each point on the trailing edge of the forward blade (i) there is an auxiliary coordinate system with a first, second and third coordinate direction (s, q, or), the first coordinate direction (s) is oriented at the angle lambdam with respect to the meridional direction m in a downstream direction, the second coordinate direction (q) is oriented perpendicular to the first coordinate direction (s) away from the pressure side of the forward blade (i), and the third coordinate direction (or) is perpendicular to both the first coordinate direction (s) and the second coordinate direction (q),
   - the effective chord length Ieff is measured as the distance between the leading edge of the forward blade (i) and the trailing edge of the rear blade (i+1), parallel to the first coordinate direction (s),
   - the value of the effective chord length Ieff along the middle meridional flow line is labelled as IeffSLM, and
   - the normalized effective chord length Ieffn of the forward and rear blades is defined as Ieffn=Ieff/IeffSLM

   **characterized in that**
   at least one of the normalized chord lengths In, namely the normalized chord length In(i) of the forward blade, the normalized chord length In(i+1) of the rear blade, the normalized additive chord length Iaddn and/or the normalized effective chord length Ieffn of a blade row pair increases, at least locally, in the region between the middle meridional flow line (SLM) and at least one of the main flow path boundaries (HB), in the direction of the main flow path boundary (HB).

2. Blade row group according to Claim 1, **characterized in that** the distribution of at least one of said normalized chord lengths In in the region between the middle meridional flow line (SLM) and the main flow path boundary (HB) via the main flow path penetration (HE) is entirely below an upper limit curve Ino and entirely above a lower limit curve Inu, the upper limit curve Ino being given by:

$$Ino = -2 \cdot 10^{-7}(HE)^4 + 2 \cdot 10^{-5}(HE)^3 - 0.0004 \cdot (HE)^2 - 0.004(HE) + 0.3$$

and the lower limit curve Inu being given by:

$$Inu = 1 \cdot 10^{-7}(HE)^4 - 1 \cdot 10^{-5}(HE)^3 - 0.0007 \cdot (HE)^2 - 0.0154(HE) + 0.1.$$

3. Blade row group according to Claim 1 or 2, **characterized in that** the distribution of at least one of said normalized chord lengths in the region between the middle meridional flow line (SLM) and the main flow path boundary (HB) is defined within a narrow band around a central distribution Inc, according to:

$$Inc - 0.05 \; < \; In \; < \; Inc + 0.05,$$

where

$$Inc = -1 \cdot 10^{-8}(HE)^4 + 3 \cdot 10^{-7}(HE)^3 + 0.0001 \cdot (HE)^2 - 0.0105 \, (HE) + 0.2$$

4. Blade row group according to the preceding claims, **characterized in that** at least one of the features according to Claims 1 to 3 is provided simultaneously for the normalized chord length In(i) of the forward blade and for the normalized chord length In(i+1) of the rear blade, and/or at least one of the features according to Claims 1 to 3 is provided simultaneously for the normalized chord length In(i) of the forward blade, for the normalized chord length In(i+1) of the rear blade, and for the normalized effective chord length Ieffn.

5. Blade row group according to one of Claims 1 to 3, **characterized in that** at least one of the features according to Claims 1 to 3 is provided for the normalized chord length In(i) of the forward blade but not for the normalized chord length In(i+1) of the rear blade, and/or at least one of the features according to Claims 1 to 3 is provided for the normalized chord length In(i+1) of the rear blade, but not for the normalized chord length In(i) of the forward blade.

6. Blade row group according to one of the preceding claims, **characterized in that** the following is true for at least one of said normalized chord lengths **In: that** in the case of a main flow path penetration (HE) of 25% (at the quarter-meridional flow line SLQ) only a small proportion of the increase with respect to the value at the middle meridional flow line (SLM) is provided, according to: (In at SLQ)<=((In max)-1)*0.3)+1.

7. Blade row group according to one of the preceding claims, **characterized in that** at the middle meridional flow line (SLM) values of the chord length ratio in the range 0.8<PTVSLM<2.0 or in the range 1.2<PTVSLM<1.4 are provided.

8. Blade row group according to one of the preceding claims, **characterized in that** the relative chord length ratio PTVr decreases, at least locally, in the region between the middle meridional flow line (SLM) and the main flow path boundary (HB), in the direction of the main flow path boundary (HB), and at the main flow path boundary (HB) a value of less than or equal to 0.85 is provided.

9. Blade row group according to one of the preceding claims, **characterized in that** at the main flow path boundary (HB) a value of the relative chord length ratio PTVr in the range 0.8>PTVr>0.6 or in the range 0.6>PTVr>0.55 is provided.

10. Blade row group according to one of the preceding claims, **characterized in that** along the blade height for the relative chord length ratio PTVr there is provided an essentially or exactly constant profile in a part region between the middle meridional flow line (SLM) and the main flow path boundary (HB).

**11.** Blade row group according to one of the preceding claims, **characterized in that** in the case of a main flow path penetration of 25% (at the quarter-meridional flow line SLQ) only a small proportion of the decrease with respect to the value at the middle meridional flow line (SLM) is provided, according to:

$$(\text{PTVr at SLQ}) >= 1 - (1 - (\text{PTVr max})) * 0.3.$$

**12.** Blade row group according to one of the preceding claims, **characterized in that** the relative chord length ratio PTVr in the region between the middle meridional flow line (SLM) and the main flow path boundary (HB), plotted over the main flow path penetration (HE), is entirely below an upper limit curve PTVro and entirely above a lower limit curve PTVru, the upper limit curve PTVro being given by:

$$PTVro = -8 \cdot 10^{-8}(HE)^4 + 1 \cdot 10^{-5}(HE)^3 - 0.0007 \cdot (HE)^2 + 0.0194(HE) + 0.85$$

and the lower limit curve PTVru being given by:

$$PTVru = 2 \cdot 10^{-7}(HE)^4 - 2 \cdot 10^{-5}(HE)^3 + 0.0006 \cdot (HE)^2 + 0.0081(HE) + 0.55.$$

**13.** Blade row group according to one of the preceding claims, **characterized in that** the distribution of the relative chord length ratio PTVr in the region between the middle meridional flow line (SLM) and the main flow path boundary (HB) is defined within a narrow band around a central distribution PTVrc, according to:

$$\text{PTVrc} - 0.05 < \text{ln} < \text{PTVrc} + 0.05,$$

where

$$PTVrc = 2 \cdot 10^{-8}(HE)^4 + 1 \cdot 10^{-8}(HE)^3 - 0.0003 \cdot (HE)^2 + 0.0165(HE) + 0.7.$$

**14.** Blade row group according to one of the preceding claims, **characterized in that** at least in a region of the blade height, adjoining one of the main flow path boundaries, between the forward section of the suction side of a blade of a member blade row (i+1) and the rear section of the pressure side of a blade of a member blade row (i) there is provided a secondary passage (NP) which guides the local flow on both sides.

**15.** Blade row group according to one of the preceding claims, **characterized in that** at least one of the features according to Claims 1 to 14 is provided simultaneously at both blade ends or, as the case may be, blade halves.

**Revendications**

**1.** Groupe de rangées d'aubes pouvant être disposé dans un chemin d'écoulement principal d'une turbomachine et constitué de N rangées d'aubes membres adjacentes et disposées fixement les unes par rapport aux autres à la fois dans la direction méridionale (m) et dans la direction périphérique (u), le nombre N des rangées d'aubes membres étant supérieur ou égal à 2 et (i) caractérisant l'indice courant avec des valeurs comprises entre 1 et N, une rangée d'aubes membres avant avec des aubes avant (i) avec un bord d'attaque et un bord de fuite ainsi qu'une rangée d'aubes membres arrière avec des aubes arrière (i+1) avec un bord d'attaque et un bord de fuite étant données,

- le groupe de rangées d'aubes présentant deux bordures de chemin d'écoulement principal (HB),
- dans chaque coupe linéaire d'écoulement méridionale (plan m-u) à travers le groupe d'aubes, la corde de l'aube avant Se(i) et la corde de l'aube arrière Se(i+1) étant définies comme la tangente côté pression au profil respectif,
- la profondeur de profil l(i) de l'aube avant et la profondeur l(i+1) de l'aube arrière étant définies dans la direction de la corde respective,

- les valeurs des profondeurs de profil I(i) et I(i+1) au niveau de la ligne d'écoulement méridionale médiane étant définies par I(i)SLM et I(i+1)SLM,

- les profondeurs de profil normées In(i) de l'aube avant et In(i+1) de l'aube arrière étant définies par In(i) = I(i)/I(i)SLM et In(i+1) = I(i+1)/I(i+1)/SLM,

- le rapport des profondeurs de profil PTV de l'aube avant et de l'aube arrière étant défini par PTV = I(i)/I(i+1),

- la valeur du rapport des profondeurs de profil PTV au niveau de la ligne d'écoulement méridionale médiane étant définie par PTVSLM, et le rapport des profondeurs de profil relatif PTVr est défini par PTVr = PTV/PTVSLM,

- la profondeur de profil additive Iadd de l'aube avant et de l'aube arrière étant définie par Iadd = I(i)+I(i+1),

- la valeur de la profondeur de profil additive Iadd au niveau de la ligne d'écoulement méridionale médiane étant désignée par IaddSLM,

- la profondeur de profil additive normée est définie par Iaddn = Iadd / IaddSLM,

- l'angle d'échelonnement de l'aube avant lambda(i) et l'angle d'échelonnement de l'aube arrière lambda(i+1) étant définis en tant qu'angle d'inclinaison de la corde respective par rapport à la direction méridionale m,

- l'angle d'échelonnement moyen lambdam étant défini comme valeur moyenne des angles d'échelonnement lambda(i) et lambda(i+1), avec lambdam = (lambda(i) + lambda(i+1))/2,

- en chaque point du bord de fuite de l'aube avant (i), un système de coordonnées auxiliaire avec une première, une deuxième et une troisième direction de coordonnées (s, q, or) étant donné, la première direction de coordonnées (s) étant orientée vers l'aval suivant l'angle lambdam par rapport à la direction méridionale m, la deuxième direction de coordonnées (q) étant orientée perpendiculairement à la première direction de coordonnées (s) en s'éloignant du côté pression de l'aube avant (i), et la troisième direction de coordonnées (or) étant perpendiculaire à la première direction de coordonnées (s) et à la deuxième direction de coordonnées (q),

- la profondeur de profil effective Ieff étant mesurée comme la distance entre le bord d'attaque de l'aube avant (i) et le bord de fuite de l'aube arrière (i+1) parallèlement à la première direction de coordonnées (s),

- la valeur de la profondeur de profil effective Ieff au niveau de la ligne d'écoulement méridionale médiane étant désignée par IeffSLM, et

- la profondeur de profil effective normée Ieffn de l'aube avant et de l'aube arrière étant définie par Ieffn = Ieff/IeffSLM,

**caractérisé en ce que**
au moins l'une des profondeurs de profil normées In, à savoir la profondeur de profil normée In(i) de l'aube avant, la profondeur de profil normée In(i+1) de l'aube arrière, la profondeur de profil additive normée Iaddn et/ou la profondeur de profil effective normée Ieffn d'une paire de rangées d'aubes dans la région entre la ligne d'écoulement méridionale médiane (SLM) et au moins l'une des bordures de chemin d'écoulement principal (HB) dans la direction de la bordure de chemin d'écoulement principal (HB), augmentant au moins localement.

2. Groupe de rangées d'aubes selon la revendication 1, **caractérisé en ce que** la répartition d'au moins l'une desdites profondeurs de profil normées In dans la région entre la ligne d'écoulement méridionale médiane (SLM) et la bordure de chemin d'écoulement principal (HB) sur la pénétration du chemin d'écoulement principal (HE) s'étend complètement en dessous d'une courbe limite supérieure Ino et complètement au-dessus d'une courbe limite inférieure Inu, la courbe limite supérieure Ino étant définie par :

$$Ino = -2 \cdot 10^{-7}(HE)^4 + 2 \cdot 10^{-5}(HE)^3 - 0,0004 \cdot (HE)^2 - 0,004(HE) + 0,3$$

et la courbe limite inférieure Inu étant définie par :

$$Inu = 1 \cdot 10^{-7}(HE)^4 - 1 \cdot 10^{-5}(HE)^3 - 0,0007 \cdot (HE)^2 - 0,0154(HE) + 0,1.$$

3. Groupe de rangées d'aubes selon la revendication 1 ou 2, **caractérisé en ce que** la répartition d'au moins l'une desdites profondeurs de profil normées dans la région entre la ligne d'écoulement méridionale médiane (SLM) et la bordure de chemin d'écoulement principal (HB) est définie à l'intérieur d'une bande étroite autour d'une répartition centrale Inc, avec :

$$Inc - 0,05 < In < Inc + 0,05,$$

où :

$$Inc = -1 \cdot 10^{-8}(HE)^4 + 3 \cdot 10^{-7}(HE)^3 + 0,0001 \cdot (HE)^2 - 0,0105(HE) + 0,2.$$

4. Groupe de rangées d'aubes selon l'une quelconque des revendications précédentes, **caractérisé en ce qu'**au moins l'une des caractéristiques selon les revendications 1 à 3 est prévue simultanément pour la profondeur de profil normée In(i) de l'aube avant et pour la profondeur de profil normée In(i+1) de l'aube arrière et/ou au moins l'une des caractéristiques selon les revendications 1 à 3 est simultanément prévue pour la profondeur de profil normée In(i) de l'aube avant, la profondeur de profil normée In(i+1) de l'aube arrière et la profondeur de profil effective normée Ieffn.

5. Groupe de rangées d'aubes selon l'une quelconque des revendications 1 à 3, **caractérisé en ce qu'**au moins l'une des caractéristiques selon les revendications 1 à 3 est prévue pour la profondeur de profil normée In(i) de l'aube avant, mais pas pour la profondeur de profil normée In(i+1) de l'aube arrière, et/ou au moins l'une des caractéristiques selon les revendications 1 à 3 est prévue pour la profondeur de profil normée In(i+1) de l'aube arrière mais pas pour la profondeur de profil normée In(i) de l'aube avant.

6. Groupe de rangées d'aubes selon l'une quelconque des revendications précédentes, **caractérisé en ce que** pour au moins l'une desdites profondeurs de profil normées In, dans le cas d'une pénétration du chemin d'écoulement principal (HE) de 25 % (au niveau de la ligne d'écoulement méridionale au niveau d'un quart SLQ), on a seulement une plus petite proportion d'augmentation par rapport à la valeur au niveau de la ligne d'écoulement méridionale médiane (SLM), selon la relation suivante : (In pour SLQ) <= ((In max)-1)*0,3)+1.

7. Groupe de rangées d'aubes selon l'une quelconque des revendications précédentes, **caractérisé en ce qu'**au niveau de la ligne d'écoulement méridionale médiane (SLM), on a des valeurs du rapport de profondeur de profil dans une plage de 0,8 < PTVSLM < 2,0 ou dans une plage de 1,2 < PTVSLM < 1,4.

8. Groupe de rangées d'aubes selon l'une quelconque des revendications précédentes, **caractérisé en ce que** le rapport de profondeur de profil relatif PTVr dans la région entre la ligne d'écoulement méridionale médiane (SLM) et la bordure de chemin d'écoulement principal (HB) dans la direction de la bordure de chemin d'écoulement principal (HB) diminue au moins localement et, au niveau de la bordure de chemin d'écoulement principal (HB), il est prévu une valeur inférieure ou égale à 0,85.

9. Groupe de rangées d'aubes selon l'une quelconque des revendications précédentes, **caractérisé en ce qu'**au niveau de la bordure de chemin d'écoulement principal (HB), il est prévu une valeur du rapport de profondeur de profil relatif PTVr dans la plage de 0,8 > PTVr > 0,6 ou dans la plage de 0,6 > PTVr > 0,55.

10. Groupe de rangées d'aubes selon l'une quelconque des revendications précédentes, **caractérisé en ce que** le long de la hauteur d'aubes pour le rapport de profondeur de profil relatif PTVr, il est prévu une allure essentiellement ou exactement constante dans une région partielle entre la ligne d'écoulement méridionale médiane (SLM) et la bordure de chemin d'écoulement principal (HB).

11. Groupe de rangées d'aubes selon l'une quelconque des revendications précédentes, **caractérisé en ce que** dans le cas d'une pénétration du chemin d'écoulement principal de 25 % (au niveau de la ligne d'écoulement méridionale au niveau d'un quart SLQ), on a seulement une plus petite proportion de diminution par rapport à la valeur au niveau de la ligne d'écoulement méridionale médiane (SLM), selon la relation suivante : (PTVr pour SLQ) >= 1-(1-(PTVr max))*0,3).

12. Groupe de rangées d'aubes selon l'une quelconque des revendications précédentes, **caractérisé en ce que** le rapport de profondeur de profil relatif PTVr dans la région entre la ligne d'écoulement méridionale médiane (SLM) et la bordure de chemin d'écoulement principal (HB), reporté sur la pénétration du chemin d'écoulement principal (HE), s'étend complètement en dessous d'une courbe limite supérieure PTVro et complètement au-dessous d'une courbe limite inférieure PTVru, la courbe limite supérieure PTVro étant définie par:

$$PTVro = -8 \cdot 10^{-8}(HE)^4 + 1 \cdot 10^{-5}(HE)^3 - 0,0007 \cdot (HE)^2 + 0,0194(HE) + 0,85$$

et la courbe limite inférieure PtVru étant définie par :

$$PTVru = 2 \cdot 10^{-7}(HE)^4 - 2 \cdot 10^{-5}(HE)^3 + 0,0006 \cdot (HE)^2 + 0,0081(HE) + 0,55.$$

**13.** Groupe de rangées d'aubes selon l'une quelconque des revendications précédentes, **caractérisé en ce que** la répartition du rapport de profondeur de profil relatif PTVr dans la région entre la ligne d'écoulement méridionale médiane (SLM) et la bordure de chemin d'écoulement principal (HB) est définie à l'intérieur d'une bande étroite autour d'une répartition centrale PTVrc, selon la relation suivante :

$$PTVrc - 0,05 < In < PTVrc + 0,05,$$

où

$$PTVrc = 2 \cdot 10^{-8}(HE)^4 + 1 \cdot 10^{-8}(HE)^3 - 0,0003 \cdot (HE)^2 + 0,0165(HE) + 0,7.$$

**14.** Groupe de rangées d'aubes selon l'une quelconque des revendications précédentes, **caractérisé en ce qu'**au moins dans une région de hauteur d'aubes adjacentes à l'une des bordures de chemin d'écoulement principal, entre la portion avant du côté d'aspiration d'une aube d'une rangée d'aubes membres (i+1) et la portion arrière du côté de refoulement d'une aube d'une rangée d'aubes membres (i), est prévu un passage secondaire (NP) qui conduit l'écoulement local des deux côtés.

**15.** Groupe de rangées d'aubes selon l'une quelconque des revendications précédentes, **caractérisé en ce qu'**au moins l'une des caractéristiques selon les revendications 1 à 14 est prévue simultanément au niveau des deux extrémités d'aubes ou des deux moitiés d'aubes.

# Fig. 1

EP 2 913 479 B1

**Fig. 2**

EP 2 913 479 B1

Fig.3

# Fig. 4

Fig. 5

# Fig. 6

## Ansicht
## B-B

Fig.6a

Fig.6b

Fig.6c

Fig.6d

## Fig. 7

**Fig. 8**

EP 2 913 479 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2261463 A2
- US 20130209223 A1
- US 20130209224 A1
- EP 2626514 A